# FASCICULE DE BREVET EUROPEEN

(11) **EP 0 485 260 B1**
(45) Date de publication et mention de la délivrance du brevet: **21.02.1996**
(21) Numéro de dépôt: 91402914.5
(22) Date de dépôt: 30.10.1991
(51) Int. Cl.: H04J 3/22, H04J 3/16, H04L 5/14

(54) **Procédé de multiplexage-démultiplexage numérique multidébit**
Verfahren zum Multiplexieren-Demultiplexieren eines digitalen Signals mit mehreren Übertragungsraten
Digital multirate-multiplexing/demultiplexing method

(30) Priorité: 09.11.1990 FR 9013923
(43) Date de publication de la demande: 13.05.1992
(73) Titulaire: FRANCE TELECOM, F-75015 Paris (FR)
(72) Inventeur: Abiven, Jacques, F-22420 Plouaret (FR)
(74) Mandataire: Martinet & Lapoux

(56) Documents cités:
- DE-A- 3 211 966
- DE-A- 3 717 854
- FR-A- 2 412 994
- US-A- 3 781 818

## Description

La présente invention concerne le multiplexage d'une pluralité de canaux numériques parallèles ayant des débits primaires qui sont différents, en une trame numérique ayant des durée et période prédéterminées, et reciproquement, le démultiplexage correspondant.

Actuellement, pour multiplexer de tels canaux numériques, ceux-ci sont multiplexés bit à bit ou octet par octet, ou plus généralement mot par mot d'un nombre de bit déterminé, en une trame ayant un débit élevé prédéterminé qui est supérieur au plus grand commun multiple des débits primaires. Le débit est constant dans toute la trame. La trame n'est divisée en secteur seulement pour des buts de gestion de la trame, afin d'insérer à des intervalles réguliers des informations de gestion, relatives notamment à la qualité de la transmission de la trame et à des informations sur l'état au moins d'un canal numérique (par example DE-A-3 717 854 et US-A-3 781 818).

Quel que soit le débit primaire d'une station terminale recevant une telle trame produite par une station centrale desservant une pluralité de stations terminales, la station terminale doit être adaptée aussi bien en transmission qu'en réception, à l'unique débit élevé en ligne de la trame. La station terminale doit comporter un démultiplexeur de trame de manière à atteindre le niveau hiérarchique des canaux numériques et extraire le canal numérique respectif.

Une autre solution pour distribuer des canaux numériques à différents débits à partir d'une station centrale est de distinguer physiquement des moyens de transmission intermédiaires entre les stations en fonction du débit des canaux. Dans ce cas, à chaque groupe de stations terminales reliées à des canaux numériques ayant le même débit est associé un réseau de transmission étoilé avec un débit en ligne correspondant au débit de canal. Lorsqu'un nouveau débit de station terminale est disponible, il est nécessaire de créer un nouveau réseau.

La présente invention remédie aux inconvénients des solutions connues ci-dessus en constituant une trame multidébit, c'est-à-dire une même et unique trame où divers débits en ligne, dits également vitesses de modulation, associés à divers types de stations terminales se côtoient et sont transmis à travers un unique réseau entre la station centrale et les stations terminales. Au contraire, il est souligné que selon la technique antérieure, une trame obtenue par le multiplexage à division du temps de données de sources primaires à débits faible différents n'a qu'un unique débit binaire constant c'est-à-dire tous les bits de la trame ont une même largeur, quel que soit le débit de source primaire dont ils sont issus.

A cette fin, un procédé de multiplexage est caractérisé en ce que la trame comporte des secteurs de durée prédéterminée auxquels sont assignés des canaux numériques parmi ladite pluralité de canaux et qui ont des débits en ligne supérieurs auxdits débits primaires des canaux assignés respectivement, lesdits débits en ligne étant différents et sous-multiples d'un plus grand débit en ligne.

Selon une réalisation préférée, le procédé consiste essentiellement en la formation d'une trame donnée suivant les étapes suivantes :
- mémorisation de bits des canaux pendant une période de trame précédant la trame donnée respectivement aux débits primaires pour constituer des groupes mémorisés parallèles de bits sérialisés de canal,
- lecture parallèle des groupes de bits de canal à des débits en ligne correspondants respectivement auxdits débits primaires des canaux pendant la durée de chacun des secteurs de la trame donnée, afin de répéter chacun des groupes de bits autant de fois qu'il y a de secteurs dans une trame,
- assignation de canaux numériques parmi ladite pluralité de canaux numériques auxdits secteurs de la trame, respectivement, et
- sélection de l'un des groupes parallèles de bits répétés provenant de chacun des canaux assignés pendant la durée du secteur respectif afin de multiplexer les groupes de bits sélectionnés, à raison d'un groupe par secteur, dans la trame donnée.

Ce procédé est applicable aussi bien pour une transmission en mode duplex, que pour une transmission en mode semi-duplex, dit à l'alternat, pour lequel la durée d'une trame est inférieure à la demi-période de trame.

L'invention concerne également un dispositif de multiplexage pour la mise en oeuvre du procédé du multiplexage ci-dessus. Le dispositif de multiplexage comprend :
- plusieurs moyens pour mémoriser des bits des canaux en parallèle respectivement,
- plusieurs moyens pour écrire des groupes parallèles de bits de canal respectivement dans les moyens pour mémoriser auxdits débits primaires pendant chaque période de trame,
- plusieurs moyens pour lire les groupes de bits dans les moyens pour mémoriser, auxdits débits en ligne correspondant respectivement aux débits binaires des canaux pendant la durée de chacun des secteurs d'une trame,
- des moyens pour mémoriser des adresses de canaux de numériques assignés respectivement aux secteurs de trame,
- des moyens pour lire les adresses de canal assigné en correspondance aux secteurs respectifs dans la trame, et
- des moyens pour multiplexer des groupes de bits lus respectivement en réponse aux adresses de canal assigné et pendant les durées de secteur de trame.

D'autres caractéristiques du dispositif de multiplexage sont énoncées dans la revendication 8.

Réciproquement, l'invention a trait à un procédé pour démultiplexer des canaux numériques à partir d'une trame donnée à secteur analogue à celle obtenue selon le procédé de multiplexage selon l'invention, et à un dispositif de multiplexage pour la mise en oeuvre du procédé pour démultiplexer.

Le procédé pour démultiplexer est caractérisé par les étapes suivantes :
- mémorisation des bits de canaux (bits utiles) respectivement compris dans les secteurs pendant les durées des secteurs de la trame donnée et au plus grand débit en ligne,
- lecture de groupes de bits en série respectivement associés à des rangs des bits dans tous les secteurs, les rangs étant définis par rapport aux bits dans un secteur ayant le plus grand débit en ligne, chaque groupe comprenant des bits localisés à un même rang respectivement dans les secteurs, et ladite lecture des groupes s'effectuant au plus grand débit primaire de manière à produire un signal multiplex où les secteurs sont multiplexés bit à bit pendant une période de trame et,
- aiguillage cyclique des bits du signal multiplex respectivement vers les canaux numériques assignés auxdits secteurs plus grands.

Le dispositif de démultiplexage comprend :
- des moyens pour convertir les bits de canal en série dans chacun des secteurs de la trame donnée en des groupes successifs à NB bits de canal parallèles, où le nombre de bits NB est sous-multiple du nombre de secteurs de canal NS dans une trame,
- des moyens pour mémoriser des groupes à NB bits parallèles pendant une période de trame,
- des moyens pour écrire les groupes à NB bits parallèles dans les moyens pour mémorise à un débit sous-multiple du plus grand débit en ligne dans les secteurs de trame par rapport au nombre de bits NB,
- des moyens pour lire les groupes à NB bits prallèles dans les moyens pour mémoriser à un débit multiple du plus grand débit primaire de canal par rapport au nombre de secteurs NS, la lecture des groupes s'effectuant de sorte que NS groupes à NB bits parallèles contenant des bits localisés à NB mêmes rangs respectivement dans les NS secteurs de trame sont lus successivement audit débit multiple afin de former un ensemble à NS groupes, et chacun des ensembles à NS groupes est lu successivement NB fois audit plus grand débit primaire,
- des moyens pour sélectionner successivement NB séries ayant chacune NS bits consécutifs dans NB ensembles identiques lus successivement, une série comprenant des bits de rang identique dans les secteurs, et les séries étant sélectionnées selon l'ordre croissant des rangs des bits dans les secteurs de manière à obtenir le signal multiplex où les secteurs sont multiplexés bit à bit durant une période de trame, et
- des moyens pour aiguiller les bits du signal multiplex vers les canaux numériques en fonction de la correspondance entre des adresses des secteurs de trame et des adresses de canaux.

D'autres caractéristiques du dispositif de démultiplexage sont énoncées dans les revendications 12 à 14.

Une station centrale reliée à des canaux numériques bidirectionnels ayant des débits primaires qui sont différents, pour desservir plusieurs stations terminales qui communiquent avec la station centrale à travers un réseau de communication arborescent multidébit et qui sont adaptées à des débits en ligne respectivement associés et supérieurs aux débits primaires comprend un dispositif de multiplexage et un dispositif de démultiplexage tels que définis ci-dessus selon l'invention.

Dans ces conditions, une station terminale propre à recevoir et transmettre un canal numérique par l'intermédiaire de secteurs de trame ayant un débit en ligne prédéterminé, comprend des moyens pour extraire un secteur audit débit en ligne d'une trame sortante de la station centrale et pour convertir le secteur extrait en un groupe de bits au débit primaire du canal numérique, des moyens pour convertir un groupe de bits au débit primaire du canal numérique en un secteur audit débit en ligne et intoduire ledit secteur dans une trame entrant dans la section centrale.

D'autres avantages et caractéristiques de l'invention apparaîtront plus clairement à la lecture de la description suivante de plusieurs réalisations préférées de l'invention en référence aux dessins annexés correspondants dans lequels :
- la figure 1 montre en détail une trame multidébit selon l'invention par rapport à une période de trame et aux divers secteurs la composant ;
- la figure 2 est un bloc-diagramme schématique de moyens de multiplexage multidébit et d'émission inclus dans une station centrale incorporant les procédés et dispositifs de multiplexage et démultiplexage selon l'invention ;
- la figure 3 est un bloc-diagramme schématique de moyens de réception et de démultiplexage multidébit inclus dans la station centrale ;
- la figure 4 montre en détail un circuit d'aiguillage de bit de canal inclus dans les moyens de réception et démultiplexage ;
- la figure 5 est un bloc-diagramme shématique de moyens de réception d'une station terminale selon l'invention et associé à un débit en ligne maximum ; et
- la figure 6 est un bloc-diagramme schématique de moyens d'émission dans la station terminale associée au débit en ligne maximum.

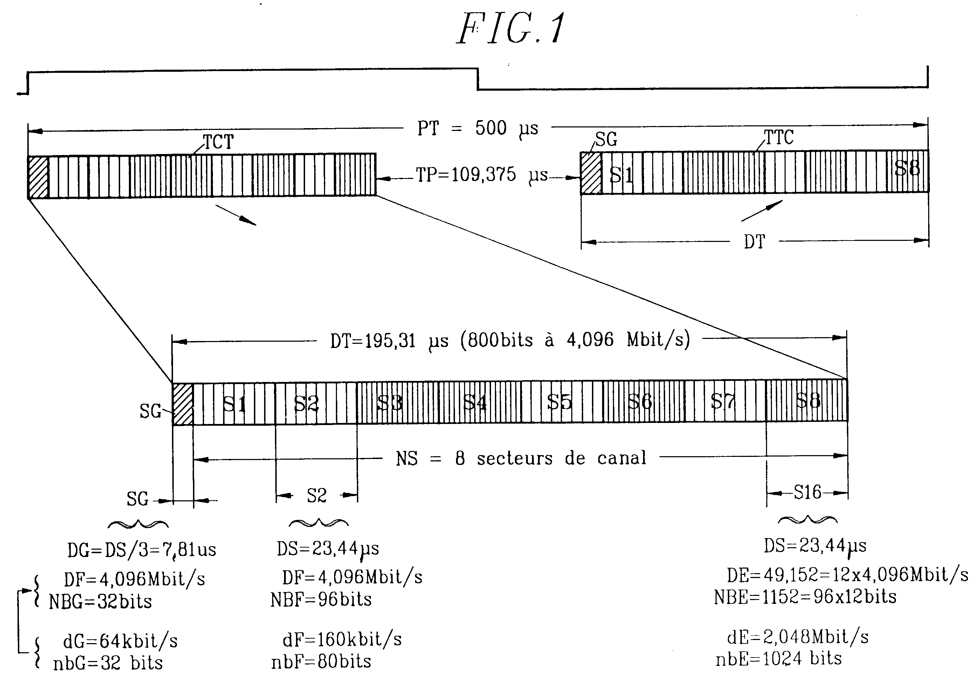

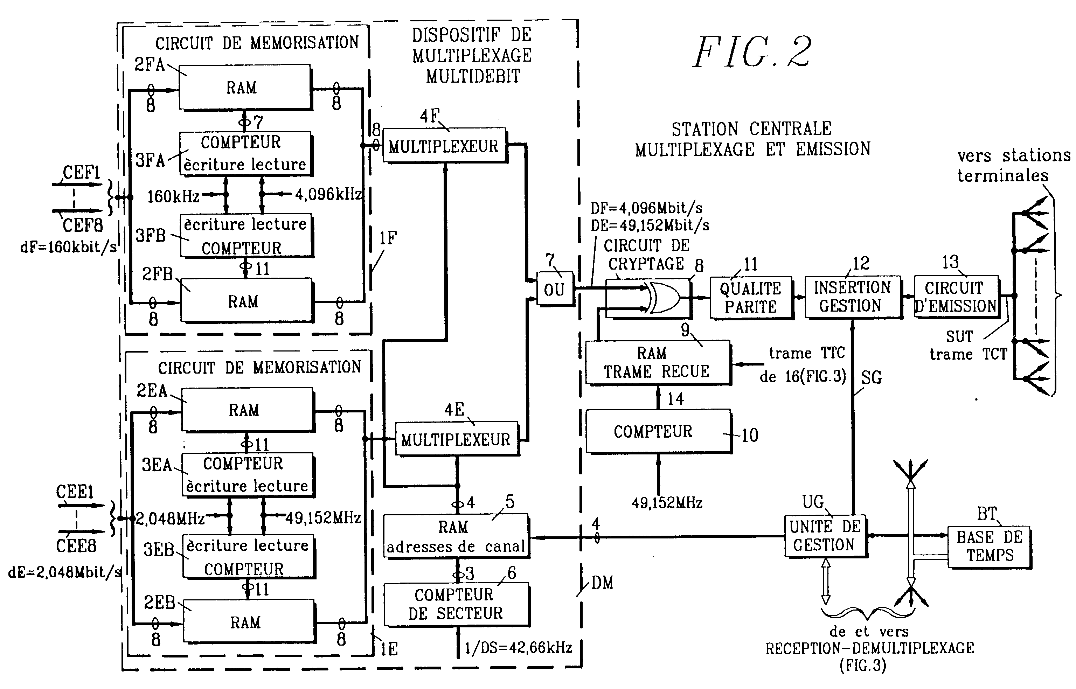

Dans la suite, des valeurs numériques de durées, débits, fréquences et nombres de bits notamment sont indiquées à titre d'exemples non limitatifs pour concourir à la constitution d'une trame numérique multidébit TCT selon l'invention, comme montré à la figure 1.

La trame TCT a une période PT = 500 µs correspondant à une fréquence de 2 kHz, et une durée DT = 195,31 µs, ici nettement inférieure à la période PT. La durée DT peut être définie comme correspondant à une transmission de 800 bits à un débit constant DF = 4,096 Mbit/s qui est le plus petit débit en ligne dans les secteurs de la trame.

La trame TCT est composée d'un secteur de gestion SG en en-tête de la trame, et de NS = 8 secteurs de canal numérique S1 à S8.

Le secteur de gestion SG comprend un mot de verrouillage de trame MVT destiné à synchroniser des bases de temps dans des stations terminales qui sont desservies à travers un support de transmission arborescent SUT, par exemple un support à fibres optiques, par une station centrale qui inclut un dispositif de multiplexage formant la trame TCT. Les stations terminales ont des débits de réception/transmission DF, DE qui sont différents entre elles. Le secteur de gestion comporte également des mots échangés entre la station centrale et l'une des stations terminales selon un protocole déterminé, par exemple, pour la mise en service et l'attribution de l'un des secteurs de canal à cette station terminale, ou le réglage du niveau d'amplitude d'émission du circuit d'émission dans la station terminale. D'autres mots de gestion relatifs notamment à la parité des secteurs de la trame, aux numéros et débits des secteurs en relation avec les adresses des stations terminales, et à des alarmes pour la maintenance des stations sont inclus dans le secteur SG.

Les bits du secteur de gestion SG sont traités dans les stations au débit primaire dG = 64 kbit/s et sont donc au nombre de nbG = 64 x 0,5 = 32 pour PT = 500 µs. En imposant un débit en ligne DG dans le secteur SG égal au plus faible débit DF = 4,096 Mbit/s dans les secteurs de canal afin que le secteur de gestion soit interprétable par toutes les stations terminales, la durée du secteur de gestion est DG = 7,81 µs, soit le tiers de la durée DS = 23,44 µs de chacun des secteurs de canal.

Selon la réalisation ici envisagée, les canaux numériques ont l'un des deux débits primaires dF = 160 kbit/s et dE = 2,048 Mbit/s.

Selon d'autres variantes, le nombre de débits primaires différents et donc le nombre de débits en ligne dans les secteurs peut être plus grand, voire égal au nombre NS = 8 de secteurs. Les débits en ligne sont des sous-multiples du plus grand débit en ligne DE = 49,152 Mbit/s et peuvent être 4,086 Mbit/s ; 8,192 Mbit/s ; 12,288 Mbit/s ; 16,384 Mbit/s et 24,576 Mbit/s par exemple.

Les canaux numériques aux débits dF et dE sont ainsi partagés en groupe de nbF = 160 x 0,5 = 80 bits et nbE = 2048 x 0,5 = 1024 bits à chaque période de trame PT. Un groupe de bits au débit primaire faible dF est comprimé dans un secteur, tel que le secteur S2 dans la figure 1, pour être transmis au débit en ligne faible DF = 4,096 Mbit/s ; ce secteur comprend alors NBF = (DF.DS) = 96 bits dont nbF = 80 bits de données de canal. D'une manière analogue, un groupe de bits au débit primaire élevé dE est comprimé dans un secteur, tel que le secteur S8 dans la figure 1, pour être transmis au débit en ligne élevé DE = 49,152 Mbit/s ; ce secteur comprend NBE = (DE.DS) = 1152 bits dont nbE = 1024 bits de données de canal. Les bits supplémentaires dans les secteurs, respectivement aux nombres de NBF-nbF = 16 et NBE-nbE = 128, sont des bits de remplissage sans aucune signification, ou de préférence sont utilisés en partie à des fins de maintenance, et sont localisés en fin des secteurs.

Il est à noter que les débits en ligne qui sont déterminés en fonction des caractéristiques de fonctionnement des divers types de station terminale, sont de préférence des multiples du débit en ligne faible DF, et plus précisément du débit en ligne DG du secteur de gestion, afin que le secteur de gestion puisse être traité par toutes les stations terminales. Dans l'exemple présent, un bit au débit faible DF est équivalent à DE/DF = 12 bits successifs au même état logique et au débit DE, c'est-à-dire la largeur d'un bit au débit faible DF est 12 fois plus grande que la largeur d'un bit au débit élevé DE dans la trame.

En pratique, plusieurs stations centrales selon l'invention sont incluses dans un autocommutateur téléphonique relié au réseau téléphonique commuté, et chaque station centrale dessert plusieurs stations terminales à travers un support de transmission arborescent respectif. En général, au moins NS = 8 canaux numériques pour chacun des débits primaires prévus dF, ..., dE sont reliés à des accès de la station centrale afin que, en dépendance de divers types de station terminale en nombre inférieur ou supérieur à NS, une trame puisse contenir NS = 8 secteurs avec des débits en ligne identiques, ou avec des débits respectifs différents, ou selon diverses combinaisons de débits en fonction des demandes des stations terminales pour accéder au réseau. Selon la réalisation décrite, par exemple NS = 8 canaux numériques entrants CEF1 à CEF8 sont prévus au débit primaire faible de dF = 160 kbit/s et NS = 8 canaux numériques entrants CEE1 à CEE8 sont prévus au débit primaire élevé de dE = 2,048 Mbit/s.

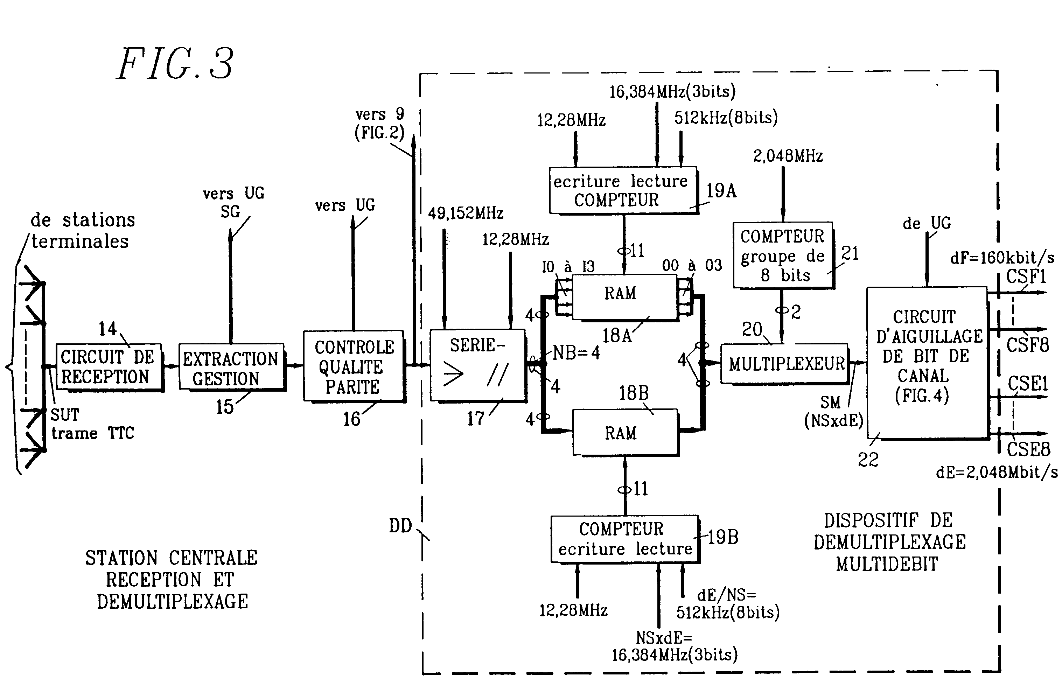

Comme montré à la figure 2, des moyens de multiplexage et d'émission dans la station centrale comprennent un dispositif de multiplexage multidébit DM, et des moyens d'émission de trame. Une base de temps BT et une unité de gestion des communications UG sont communes aux moyens de multiplexage et émission et à des moyens de réception et de démultiplexage inclus dans la station centrale et respectivement montrés aux figures 2 et 3.

En ce qui concerne la synchronisation, la base de temps BT sert d'horloge maître par rapport aux bases de temps esclaves dans les stations terminales. A partir de la fréquence de 49,152 MHz correspondant au débit élevé en ligne, la base de temps BT fournit tous les signaux d'horloge nécessaires aux opérations de multiplexage/ démultiplexage et de transmission/réception des trames, dont les fréquences sont indiquées dans la suite.

L'unité de gestion UG gère les communications et particulièrement la synchronisation des moyens d'émission dans les stations terminales en fonction de leur distance à la station centrale pour éviter tout chevauchement des secteurs dans la trame TTC reçue par la station centrale, et télécommande le réglage de la puissance desdits moyens d'émission dans les stations terminales afin que les moyens de réception dans la station centrale reçoivent des signaux numériques de même niveau d'amplitude, quelles que soient les distances des stations terminales à la station centrale. Cette gestion est assurée par l'intermédiaire notamment des bits du secteur de gestion SG des trames suivant les deux sens de transmission. Du point de vue des communications, l'unité de gestion UG établit le nombre de stations terminales en service, attribue un secteur à chaque station terminale en service, et associe chaque secteur au canal demandé par la station terminale et donc au débit demandé.

Le dispositif de multiplexage DM montré à la figure 2 comprend autant de circuits de circuits de mémorisation 1F, 1E qu'il y a de débits primaires différents dF, dE, c'est-à-dire de débits en ligne DF, DE différents.

Dans chaque circuit de mémorisation 1F, 1E sont prévues deux mémoires tampons RAM 2FA et 2FB, 2EA et 2EB, qui reçoivent des adresses de cellule à 8 bits parallèles fournies par des compteurs 3FA, 3FB, 3EA et 3EB, respectivement. Les mémoires 2FA et 2FB, 2EA et 2EB ont des entrées de données reliées respectivement aux canaux entrants parallèles CEF1 à CEF8, CEE1 à CEE8, et ont des sorties de données reliées à NS = 8 entrées de données d'un multiplexeur 4F, 4E.

Les deux mémoires dans chaque circuit de mémorisation opérent alternativement en écriture et lecture, une période de trame sur deux. Ainsi, pendant une première période de trame PTA = 500µs, nbF = 80 bits sérialisés de chacun des canaux CEF1 à CEF8 et nbE = 1024 bits sérialisés de chacun des canaux CEE1 à CEE8 sont écrits dans les mémoires 2FA et 2EA respectivement aux fréquences de 160 kHz et 2,048 MHz, tandis que des bits déjà écrits en mêmes nombres sont lus dans les mémoires 2FB et 2EB respectivement aux fréquences de 4,096 MHz et 49,152 MHz. Réciproquement, pendant une seconde période de trame PTB=500 µs succédant à la première période de trame PTA, les nbF bits écrits de chacun des canaux CEF1 à CEF8 et les nbE bits écrits de chacun des canaux CEE1 à CEE8 sont lus dans les mémoires 2FA et 2EA aux fréquences respectives de 4,096 MHz et 49,152 MHz, tandis que d'autres bits sont écrits dans les mémoires 2FB et 2EB aux fréquences respectives de 160 kHz et 2,048 MHz. Ainsi à chaque entrée du multiplexeur 4F, 4E et pendant une période de trame, un groupe de nbF, nbE bits sérialisés du canal respectif comprimé dans une durée de secteur DS est répété au moins NS = 8 fois ce qui permet d'introduire dynamiquement ce groupe de bits dans n'importe lequel des secteurs de trame à travers le multiplexeur 4F, 4E.

Pour ces opérations d'écriture et lecture, un compteur 3FA, 3FB, 3EA, 3EB est remis à zéro lorsque la mémoire associée 2FA, 2FB, 2EA, 2EB est validée en écriture, et au début et à la fin de chaque secteur lorsque la mémoire associée est validée en lecture. Les bits de remplissage sont alors ici une recopie des premiers bits dans un groupe mémorisé. Les commandes en écriture et lecture, les horloges d'écriture à 160 kHz et 2,048 MHz et les horloges de lecture à 4,096 MHz et 49,152 MHz sont fournies par la base de temps BT. Les compteurs 3FA et 3FB établissement des adresses à 7 bits et peuvent être des compteurs modulo-nbF ; les compteurs 3EA et 3FA établissement des adresses à 11 bits et peuvent être des compteurs modulo-nbE.

Les multiplexeurs 4F et 4E reçoivent huit adresses de canal entrant à 4 bits respectivement au début des secteurs S1 à S8 de la trame à former. Les adresses de canal sont lues successivement dans une mémoire RAM 5 qui est adressée par un compteur de secteur à 3 bits 6 à la fréquence de secteur 1/DS = 42,66 kHz pendant la durée de trame DT et après la durée de secteur de gestion DG au début de la trame. Préalablement, lors de l'établissement des communications, l'unité de gestion UG écrit les adresses des canaux en correspondance à des secteurs disponibles dans la trame. Ainsi, une adresse de canal appliquée aux multiplexeurs 4F et 4E par la mémoire 5 comprend trois bits sélectionnant un canal parmi les huit canaux à un même débit, et un bit sélectionnant lun des deux multiplexeurs et donc le débit du canal.

Sachant que les groupes à 96 bits et les groupes à 1152 bits sont répétés au moins huit fois en entrée des multiplexeurs et à la fréquence des secteurs, les huit adresses de canal lues dans la mémoire 5 pendant une période de trame sélectionnent huit des seize canaux afin de multiplexer temporellement les huit groupes de bit des canaux sélectionnées en huit secteurs de trame S1 à S8 aux sorties des multiplexeurs 4F et 4E qui sont reliées à un circuit logique OU à deux entrées 7. Les groupes ainsi multiplexés et ayant des débits en ligne différents sont appliqués à une entrée d'un circuit de cryptage 8 dans le circuit de transmission CT.

Selon une réalisation préférée, le circuit de cryptage 8 crypte bit à bit les huit secteurs de trame multiplexés en dépendance des secteurs de données S1 à S8 dans la trame reçue TTC par les moyens de réception et de démultiplexage dans la station centrale.

Par exemple, le circuit de cryptage 8 comprend une porte OU-exclusif ayant une première entrée reliée à la sortie du circuit OU 7 et recevant les secteurs de trame sortante à transmettre TCT et une seconde entrée à laquelle sont appliqués les secteurs de trame entrante reçus en synchronisme avec les secteurs de trame à transmettre par une sortie de données d'une mémoire tampon RAM 9. Une entrée de données de la mémoire 9 reçoit la trame reçue TTC des moyens de réception de la station centrale. Un compteur d'écriture/lecture 10 écrit les bits de la trame reçue dans la mémoire 9 pendant les intervalles de temps où sont reçus les secteurs de la trame reçue TTC, localisés à la fin de la période de trame PT selon la figure 1. Puis au début de la prochaine période de trame, le compteur 10 adresse en lecture les bits de la trame reçue pendant les intervalles de temps correspondant aux secteurs de la trame à transmettre TCT. Les écriture et lecture des bits dans la mémoire 10 sont commandées par le signal d'horloge à 49,152 MHz.

Les secteurs de trame ainsi cryptés dans le circuit 8 sont analysés dans un circuit de qualité de transmission 11 qui consiste essentiellement à fournir un bit de parité pour chacun des secteurs S1 à S8 qui est introduit à un emplacement prédéterminé à la fin du secteur, c'est-à-dire au lieu et place de l'un des 16 ou 128 derniers bits de remplissage du secteur à 4,096 Mbit/s ou 49,152 Mbit/s. Le circuit 11 comprend, entre autre, classiquement une bascule bistable à verrouillage dont la sortie complémentaire est bouclée sur l'entrée de données et qui est analogue à un diviseur de fréquence par deux.

Les bits du secteur de gestion SG sont introduits par l'unité de gestion UG pendant l'intervalle de temps de 7,81 µs au début de la trame à travers une entrée d'un circuit d'insertion 12, équivalent à une porte OU, ayant une autre entrée reliée à la sortie du circuit 11.

La trame TCT ainsi constituée est transmise dans le support de transmission SUT desservant les stations terminales à travers un circuit d'émission 13 classique. Par exemple lorsque le support de transmission est une fibre optique formant le tronc d'un réseau optique arborescent relié aux stations terminales, le circuit 13 comprend un photo-émetteur, du genre diode LED ou diode laser, avec son circuit d'amplification et de polarisation.

En se référant à nouveau à la figure 1, la trame multidébit TTC composée par les stations terminales à travers le support de transmission SUT et reçue par la station centrale a une durée DT et comprend également un secteur de gestion SG et huit secteurs de données S1 à S8, comme la trame TCT. Au niveau de la station centrale, la trame TTC est reçue à la fin de la période PT dans les dernières 195,31 µs.

Comme montré à la figure 3, les moyens de réception et de démultiplexage dans la station centrale comprennent des moyens de réception effectuant des opérations réciproques de celles accomplies par les moyens d'émission. Un circuit de réception 14 reçoit les trames TTC fournies ensemble par les stations terminales. Le circuit 14 comporte par exemple un photodétecteur du genre photodiode PIN lorsque le support SUT est composé de fibres optiques. Les trames numériques TTC traversent ensuite un circuit d'extraction de bits de gestion 15 et un circuit de contrôle de qualité 16.

Le circuit 15 extrait de chaque trame TTC, les divers mots composant le secteur de gestion SG qui sont traités par l'unité de gestion UG. Le secteur de gestion SG dans la trame TTC ne comprend pas de mot de verrouillage, et l'ensemble des mots protocolaires échangés entre l'une des stations terminales et la station centrale à une position variable dans le secteur SG qui dépend de la distance de la station terminale à la station centrale.

Le circuit 16 contrôle en particulier la parité de chacun des secteurs S1 à S8 de la trame, en comparant les bits de parité reçus en fin des secteurs S1 à S8 avec les parités calculées à partir des secteurs de la trame reçue, et signale toute anomalie résultant de ce contrôle à l'unité de gestion UG.

La trame multidébit reçue TTC ainsi dépouillée des bits de gestion et de parité et comportant essentiellement les bits de données dans les secteurs S1 à S8 est appliquée en série à la mémoire 9 (figure 2) des moyens d'émission et à l'entrée d'un convertisseur série-parallèle 17.

Dans un dispositif de démultiplexage DD de la station centrale selon l'invention sont inclus, outre le convertisseur 17, deux mémoires tampons 18A et 18B associées à des compteurs d'adresse 19A et 19B, un multiplexeur à 4 bits 20 associé à un compteur de groupe à 8 bits multiplexés 21, et un circuit d'aiguillage de bit de canal 22. Le but de l'ensemble des circuits 17 à 21 est de constituer un signal multiplex SM dans lequel les bits de données inclus dans les secteurs S1 à S8 de la trame reçue TTC sont multiplexés bit à bit à une fréquence de (1024 x 8)/500 = 16,384 MHz pendant une période de trame PT = 500 µs, en considérant chacun des NS = 8 secteurs comme composé d'un groupe de 1024 bits utiles puisque NS x dE = 16,384 MHz, quel que soit le débit en ligne du secteur. Les bits des secteurs sont alors aiguillés naturellement à cette fréquence vers les canaux sortants sélectionnés par le circuit aiguillage 22.

Dans la suite, (r,s) désigne un bit utile de rang r dans le s^{ième} secteur de la trame reçue TTC, où l'indice entier r varie de 1 à nbE = 1024 et l'indice entier s varie de 1 à NS = 8.

Le convertisseur 17 reçoit les bits de secteur à la fréquence élevée de DE = 49,152 MHz et les transmet sous forme de groupes de NB = 4 bits parallèles à la fréquence de 49,152/4 = 12,288 MHz à NB entrées de données I0 à I3 des mémoires RAM 18A et 18B. Plus généralement, le nombre de bits NB dans un groupe peut être un sous-multiple du nombre de secteurs de canal NS dans une trame, soit égal à 8 ou 4 ou 2.

Les mémoires 18A et 18B, comme les deux mémoires dans chacun des circuits de mémorisation 1F et 1E (figure 2) fonctionnent alternativement en écriture et lecture. Pendant une période de trame donnée PT = 500 µs, l'une 18A des mémoires mémorise une trame donnée reçue par groupes successifs de NS = 4 bits parallèle à la fréquence DE/NS ; puis pendant la période de trame suivante, les bits écrits dans la mémoire 18A sont lus par groupes de NB = 4 bits à la fréquence de signal multiplex SM de NS x dE = 16,384 MHz selon un ordre prédéterminé. Pendant ces deux périodes de trame successives, l'autre mémoire 18B fonctionne en lecture et écriture respectivement pour retransmettre une trame reçue précédant ladite trame donnée et pour mémoriser une trame reçue succédant à la trame donnée.

A cette fin, un compteur d'adresse 19A, 19B fournit des adresses à 11 bits à des rythmes différents en modes écriture et lecture.

En mode d'écriture, le compteur 19A, 19B est activé au début du premier secteur S1, après 7,81 µs succédant au début de la trame TTC. Le compteur 19A, 19B fournit des adresses d'écriture 0 à 255 pour écrire les nbE/NB = 256 groupes de 4 bits parallèles du secteur S1 lorsque celui-ci a un débit en ligne égal à 49,152 Mbit/s, ou pour écrire les nbF bits du secteur S1 lorsque celui-ci a un débit en ligne égal à 4,096 Mbit/s, chacun de ces bits étant en fait écrit successivement sous la forme de 3= (DE/DF)/NB groupes à NB = 4 bits identiques dans la mémoire à la fréquence de 12,288 MHz. Puis le compteur 19A, 19B est arrêté pendant la réception des 128/4 = 32 groupes de bits de remplissage pour un secteur S8 à débit en ligne égal à 49,152 Mbit/s, correspondant à 16/4 = 4 groupes de bits de remplissage pour un secteur S8 à débit en ligne égal à 4,096 Mbit/s. Les adresses d'écriture sont rythmées à la fréquence de 12,288 MHz. De la même manière, le compteur 19A, 19B fournit des adresses d'écriture 256 à 511...1792 à 2043 pendant la réception des groupes de bits utiles de données dans les secteurs S2 à S8. Ainsi, la mémoire respective 18A, 18B mémorise les bits utiles suivants appliqués aux entrées I0 à I3, les bits de remplissage dans les secteurs n'étant pas écrits dans la mémoire :
I0 = (1,1).(5,1)...(1021,1). (1,2) ...... (1021,8) ;
I1 = (2,1).(6,1)...(1022,1). (2,2) ....., (1022,8) ;
I2 = (3,1).(7,1)...(1023,1). (3,2) ...... (1023,8) ;
I3 = (4,1).(8,1)...(1024,1). (4,2) ...... (1024,8).

En mode de lecture, le compteur 19A, 19B fournit également des adresses de lecture à 11 bits. Chaque adresse de lecture relatif à un groupe de NB = 4 bits est partagée en une première partie comportant les 3 bits de poids fort de l'adresse et une seconde partie comportant les 8 bits de poids faible de l'adresse. Les trois étages du compteur correspondant à la première partie d'adresse fonctionnent alors en compteur modulo-8 à la fréquence de (NS x dE) = 16,384 MHz, tandis que les états des huit autres étages du compteur ne sont pas modifiés pendant quatre cycles consécutifs du compteur modulo-8 afin de lire successivement NB = 4 ensembles identiques ayant chacun NS = 8 groupes de NB = 4 bits parallèles, les bits dans ces groupes étant localisés à NB = 4 mêmes rangs dans les NS = 8 secteurs écrits. Dans ces conditions, chaque sortie de la mémoire correspondante 18A, 18B répéte NB = 4 fois une même série de NS = 8 bits, ces huit bits ayant un rang identique initialement dans les secteurs. Les huit autres étages du compteur 19A, 19B correspondant à la seconde partie d'adresse de lecture fonctionnent en compteur modulo-(nbE/NB)=modulo-256 à une fréquence de (NS x dE)/(NS x NB) = 16384/ ( 8 x 4) = 512 kHz afin de lire successivement des ensembles de huit groupes à 4 bits.

D'après ce mode de lecture, les sorties 00 à 03 de la mémoire correspondante 18A, 18B délivrent respectivement les bits suivants aux NB = 4 entrées du multiplexeur 20 pendant une période de trame PT :
**00**=
   (1,1).(1,2).(1,3).(1,4)...(1,8).(1,1)...(1,8).(1,1)...(1,8).(1,1) ...(1,8).(5,1).(5,2).(5,3).(5,4)...(5,8).(5,1)...(5,8).(5,1)...(5,8). (5,1)...(5,8)......(1021,1).(1021,2).(1021,3).(1021,4)...(1021,8). (1021,1)...(1021,8).(1021,1)...(1021,8).(1021,1)...(1021,8) ;
**01**=
   (2,1).(2,2).(2,3).(2,4)...(2,8).(2,1)...(2,8).(2,1)...(2,8).(2,1) ...(2,8).(6,1).(6,2).(6,3).(6,4)...(6,8).(6,1)...(6,8).(6,1)...(6,8). (6,1)...(6,8)......(1022,1).(1022,2).(1022,3).(1022,4)...(1022,8). (1022,1)...(1022,8).(1022,1)...(1022,8).(1022,1)...(1022,8) ;
**02**=
   (3,1).(3,2).(3,3).(3,4)...(3,8).(3,1)...(3,8).(3,1)...(3,8).(3,1) ...(3,8).(7,1).(7,2).(7,3).(7,4)...(7,8).(7,1)...(7,8).(7,1)...(7,8). (7,1)...(7,8)......(1023,1).(1023,2).(1023,3).(1023,4)...(1023,8). (1023,1)...(1023,8).(1023,1)...(1023,8).(1023,1)...(1023,8) ;
**03**=
   (4,1).(4,2).(4,3).(4,4)...(4,8).(4,1)...(4,8).(4,1)...(4,8).(4,1) ...(4,8).(8,1).(8,2).(8,3).(8,4)...(8,8).(8,1)...(8,8).(8,1)...(8,8). (8,1)...(8,8)......(1024,1).(1024,2).(1024,3).(1024,4)...(1024,8). (1024,1)...(1024,8).(1024,1)...(1024,8).(1024,1)...(1024,8).

Deux entrées de sélection du multiplexeur 20 sont reliées aux deux étages du compteur 21 qui reçoit un signal d'horloge à dE =16, 384/8 = 2,048 MHz. Le compteur 21 sélectionne quatre groupes ayant chacun 8 bits des secteurs multiplexés et sérialisés pendant une période de PT/(nbE/NB) = 1/(512 kHz) correspondant aux NB = 4 cycles consécutifs de la seconde partie à 8 bits du compteur 19A, 19B. Le compteur 21 sélectionne ainsi cycliquement les quatre sorties d'une mémoire 18A, 18B, et seulement huit bits sur chacune de ces sorties sont retransmis dans le signal multiplex SM pendant un cycle du compteur 21. Comme un groupe de huit bits est répété 4 fois sur une sortie de la mémoire 19A, 19B, le premier groupe de 8 bits sur la sortie 00 est sélecitonné, puis le second groupe de 8 bits sur la sortie 01, et ainsi de suite. Bien qu'un seul groupe de 8 bits soit sélectionné sur chaque sortie 00 à 04 à la fréquence de 512 kHz, les bits du groupe sont toujours transmis à la fréquence de NS x dE = 16,384 MHz. Le signal multiplex SM est composé des bits suivants pendant une période de trame complète PT :
SM=
   (1,1).(1,2).(1,3).(1,4)...(1,8).(2,1)...(2,8).(3,1)...(3,8).(4,1)...(4,8).(5,1).(5,2).(5,3).(5,4)...(5,8).(6,1)...(6,8).(7,1)...(7,8). (8,1)...(8,8)......(1021,1).(1021,2).(1021,3).(1021,4)...(1021,8). (1022,1)...(1022,8).(1023,1)...(1023,8).(1024,1)...(1024,8).

Il est rappelé que les bits d'un secteur en ligne ayant un débit en ligne inférieur au débit maximal DE est répété successivement en proportion du rapport du débit maximal audit débit en ligne ; par exemple pour le débit en ligne DF = 4,096 Mbit/s, un bit est répété 49,152/4.096 = 12 fois ; et si le secteur Ss correspond à ce débit faible, par exemple les bits (1,s) à (12,s) représentent le premier bit du secteur Ss et ont un état binaire identique à l'état du premier bit du secteur Ss.

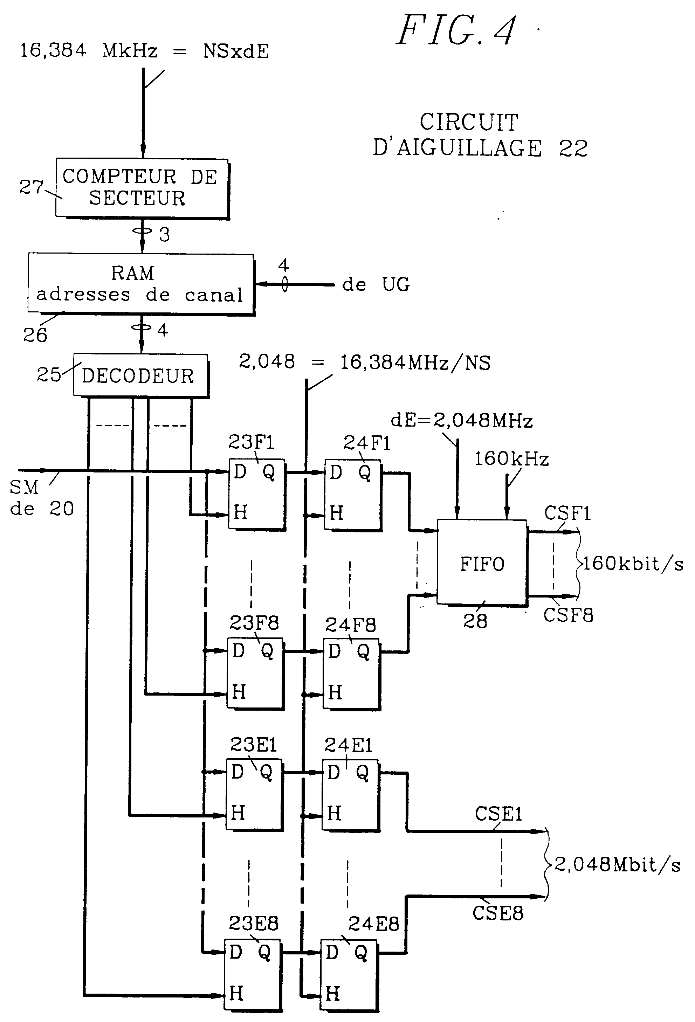

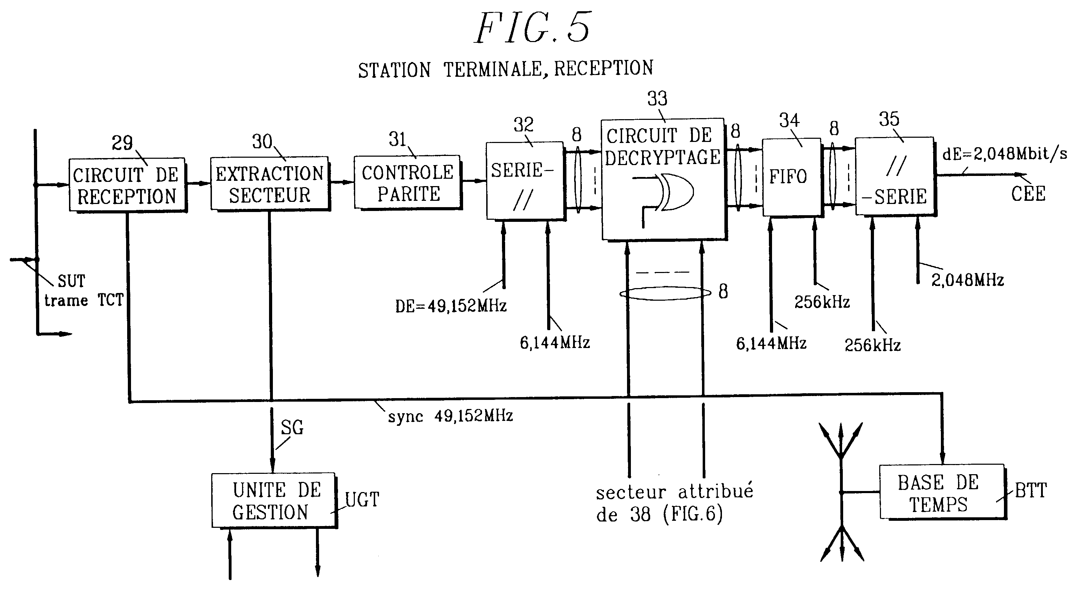

Comme montré à la figure 4, le circuit d'aiguillage 22 comprend des paires de bascules bistables 23F1 - 24F1 à 23F8 - 24F8 desservant respectivement les canaux numériques sortants CSF1 à CSF8 à faible débit, et des paires de bascules bistables 23E1 - 24E1 à 23E8 - 24E8 desservant respectivement les canaux numériques sortants CSE1 à CSE2 à débit élevé. Des entrées de données D des premières bascules 23F1 à 23F8 et 23E1 à 23E8 sont reliées à la sortie du multiplexeur 20. Des sorties Q des premières bascules sont reliées respectivement aux entrées de données des secondes bascules 24F1 à 24F8 et 24E1 à 24E8.

Des entrées d'horloge H des premières bascules 23F1 à 23F8 et 23E1 à 23E8 sont reliées respectivement à seize sorties d'un décodeur à 4 bits 25. Le décodeur décode une adresse de canal à 4 bits en un créneau à l'état logique haut "1" sur la sortie correspondante. Comme dans le dispositif de multiplexage DM, les adresses de canal sont lues dans une mémoire RAM 26 sous la commande d'un compteur de secteur 27. Le compteur 27 fournit des adresses de secteur 0 à 8 à la fréquence de NSxdE=16,384 MHz de manière à faire correspondre à chaque secteur de la trame reçue TTC, le canal respectif correspondant. L'écriture des adresses de canaux dans la mémoire 26 est effectuée par l'unité de gestion UG, lors d'établissement de communication.

Ainsi, à chaque adresse de secteur fournie par le compteur 27 à la même fréquence que les bits du signal multiplex SM correspond une première bascule 23F1 à 23F8 dont l'entrée H reçoit un créneau d'horloge. Le bit du canal correspondant dans le signal SM est ainsi appliqué à la seconde bascule correspondante 24F1 à 24F8 et est lu à la fréquence de dE = 16,384/NS = 2,048 Mhz qui est appliqué aux entrées d'horloge H des secondes bascules.

Les sorties Q des secondes bascules 24E1 à 24E8 sont reliées directement aux canaux sortants à débit élevé CSE1 à CSE8.

Les sortie Q des secondes bascules 24F1 à 24F8 sont reliées aux canaux sortants à débit faible CSF1 à CFS8 à travers une file tampon FIFO 28 dans laquelle des mots à huit bits parallèles en sortie de bascule sont écrits à la fréquence de 2,048 MHz et sont lus à la fréquence binaire des canaux égale à 160 kHz.

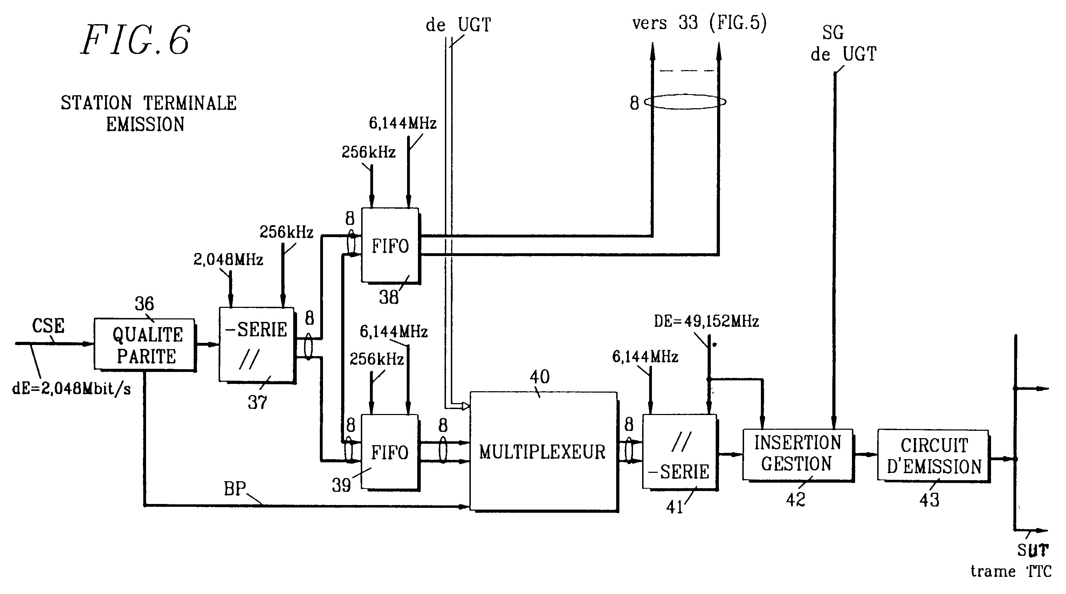

Des moyens de réception et d'émission dans une station terminale adaptée à un débit en ligne de DE = 49,152 Mbit/s sont maintenant décrits en référence aux figures 5 et 6.

La station terminale comprend une base de temps BTT qui récupère le signal d'horloge maître à 49,152 MHz à partir du signal multidébit transmis par les moyens de multiplexage et d'émission dans la station centrale via le support de transmission SUT. La base de temps BTT fournit tous les signaux d'horloge nécessaires aux moyens de réception et d'émission pour extraire le secteur respectif de la trame reçue TCT, et pour insérer le secteur de gestion SG lorsque la station terminale échange des mots protocolaires avec la station centrale et le secteur attribué à la station terminale dans la trame TTC. A titre d'exemple, S8 désigne le secteur attribué à la station terminale décrite ci-dessous.

Une unité de gestion UGT est également incluse dans la station terminale pour notamment traiter les mots protocolaires échangés avec la station centrale et surveiller la qualité de transmission.

Comme montré à la figure 5, les moyens de réception comprennent successivement à partir du support de transmission SUT, un circuit de réception 29, un circuit d'extraction de secteur 30, un circuit de contrôle de parité de secteur attribué 31, un convertisseur série-parallèle 32, un circuit de décryptage 33, une mémoire tampon 34 de type FIFO, et un convertisseur parallèle-série 35 retransmettant les bits de données du canal entrant CEE au débit primaire de 2,048 Mbit/s attribué à la station terminale.

Les circuits 29, 30 et 31 ont des fonctions analogues à celles des circuits 14, 15 et 16 dans la station centrale (figure 3). En particulier le circuit d'extraction 30 extrait le secteur de gestion SG et le secteur attribué S8 de la trame TCT pour les fournir respectivement à l'unité de gestion UGT et au circuit de contrôle de parité 31. Le circuit 31 contrôle dans le signal numérique régénéré par le circuit de réception 29, la parité du secteur attribué S8 dans les trames reçue TCT, en liaison avec l'unité de gestion UGT.

Le convertisseur 32 reçoit les bits du secteur attribué S8 à la fréquence de 49,152 MHz. Il convertit uniquement les nbE (ou nbF) bits utiles reçus dudit secteur en mots à 8 bits parallèles à la fréquence de 6,144 MHz. Dans le circuit 33 les mots à 8 bits sont décryptés par les mots à 8 bits ayant le même rang dans le secteur de la trame TTC qui à été mémorisé dans la station terminale et reçu par la station centrale pendant la période de trame précédente. Le décryptage est effectué par huit portes OU-exclusif, en accord avec le cryptage dans le circuit 8 de la station centrale.

Les mots décryptés à 8 bits parallèles du secteur attribué sortant du circuit 33 sont écrits dans la mémoire 34 à la fréquence de 6,144 MHz et sont lus continûment à la fréquence de 2048/8 = 256 kHz. Le convertisseur 35 convertit les mots à 8 bits parallèles à la fréquence de 256 kHz en les bits sérialisés du canal numérique correspondant CEE, à la fréquence de 256 x 8 = 2048 kHz.

Les moyens d'émission dans la station terminale montrée à la figure 6 comprennent, à partir d'une entrée du canal numérique correspondant CSE à 2,048 Mbit/s, un circuit de qualité de transmission 36 et un convertisseur série-parallèle 37. Le circuit 36 calcule un bit de parité BP, pour chaque période de trame PT=500 µs sur nbE=1024 bits du canal CSE. Le convertisseur 37 convertit les bit sérialisés à 2,048 MHz sortant du circuit 36 en des mots à 8 bits parallèles à la fréquence de 256 kHz.

Chaque mot à 8 bits parallèles produit par le convertisseur 37 est écrit dans deux mémoires tampons FIFO 38 et 39 à la fréquence de 2048/8 = 256 kHz et sont lus à une fréquence de mots à 8 bits dans le secteur en ligne à savoir égale à 49,152/8 = 6,144 MHz. Toutefois, les lectures dans ces deux mémoires qui s'effectuent toutes deux pendant la période de trame succédant à l'écriture des mêmes mots, sont indépendantes l'une de l'autre.

Dans la première mémoire 38, la lecture est validée pendant la réception du secteur attribué S8 dans la trame TCT reçue par la station terminale c'est-à-dire aprés (DG + 7 DS) µs à partir du début MVT de la trame TCT. Les mots à 8 bits lus sont appliqués à des secondes entrées des huit portes OU-exclusif incluses dans le circuit de décryptage 33 afin de décrypter les mots à 8 bits du secteur reçu S8 appliqués par le convertisseur 32.

Dans la seconde mémoire 39, la lecture est validée en fonction du temps de propagation entre la station terminale et la station centrale indiquée à l'unité de gestion UGT par la station centrale, c'est-à-dire pendant le créneau correspondant au secteur attribué S8 dans la trame TTC afin que les mots lus arrivent pendant les dernières DS = 23,44 µs de la période de trame PT dans la station centrale.

Les moyens d'émission dans la station terminale comprennent également à la suite de la mémoire tampon 39, un multiplexeur de bits de secteur 40, un convertisseur parallèle-série 41, un circuit d'insertion de secteur de gestion 42 et un circuit d'émission 43.

Pendant la durée DS du secteur attribué, le multiplexeur 40 reçoit les mots de bits utiles lus dans la mémoire 39 par un bus à huit fils, et des bits de commande et contrôle fournis par l'unité de gestion UGT et le circuit de qualité 36 à travers un bus d'une dizaine de fils en nombre inférieur à NBE-nbE. La sélection des bus dans le multiplexeur 40, commandée par la base de temps BTT, permet également de fournir des bits de remplissage en fin de secteur, qui sont typiquement des recopies des derniers bits utiles.

Les mots à 8 bits fournis à la fréquence de 6,144 MHz par le multiplexeur 40 sont sérialisés dans le convertisseur 41 en un secteur de NBE = 1152 bits au débit en ligne de 8 x 6,144 = 49,152 Mbit/s.

Les bits sérialisés de secteur attribué S8 traverse le circuit d'insertion 42, équivalent à une porte OU, dont l'autre entrée reçoit, le cas échéant, des bits de secteur de gestion SG de trame TTC, 8 DS µs avant et à la fréquence DF. Le circuit d'insertion 42 introduit également des bits à des emplacements prédéterminés pour que la station centrale évalue le temps de propagation entre celle-ci et la station terminale.

Enfin, le circuit d'émission 43 transmet le secteur attribué S8, éventuellement procédé de bits de gestion, dans le support SUT afin d'y être mélangé avec des secteurs provenant d'autres stations terminales actives, au niveau de coupleurs du réseau arborescent pour constituer une trame de retour TTC.

Pour une station terminale associée à un débit en ligne inférieur au débit DE, par exemple associée au débit de DF = 4,096 Mbit/s, les moyens de réception et d'émission sont analogues à ceux décrits ci-dessus et illustrés aux figures 5 et 6. Dans ce cas, les fréquences de 49,152 MHz, 6,144 MHz, 256 kHz et 2,048 MHz sont remplacées par les fréquences de 4,096 MHz, 512 kHz, 20 kHz et 160 kHz.

Toutefois, selon une variante moins complexe, pour un tel débit faible les convertisseurs 32, 35, 37 et 41 peuvent être supprimés. Le traitement des bits dans la station terminale s'effectue en série au moyen de trois FIFO à fréquence de 4,096 MHz et 160 kHz. La FIFO dans les moyens de réception est au lieu et place du convertisseur 32. Le multiplexeur 40 est supprimé dans les moyens d'émission et remplacé par des fonctions équivalentes en série dans le circuit d'insertion 42.

La présente invention est applicable lorsque la transmission entre la station centrale et les stations terminales est bidirectionnelles (duplex) à travers un support de transmission arborescent SUT, par exemple un support à câbles coaxiaux classiques, les circuits 13-14 et les circuits 29-43 pouvant être des modems, ou un support SUT à deux fibres optiques. Dans ce cas, la durée d'une trame DT est pratiquement égale à la durée d'une période de trame PT.

Selon une autre application de l'invention, le réseau de communication est dit à l'alternat (semi-duplex) et ne comporte qu'un câble coaxial ou une fibre optique arborescent. Dans ce cas, les trames aller TCT, dites également trames descendantes, et les trames retour TTC, dites également trames montantes, sont échangées alternativement entre la station centrale et les stations terminales, chacune pendant une demi-période de trame. Ainsi, comme montré clairement à la figure 1, la station centrale émet une trame TCT au début d'une période PT et reçoit une trame TTC à la fin de la période de trame PT. Un tel mode de transmission est plus précisément désigné par "mode à l'alternat collectif et à accès multiples à répartition dans le temps" (AMRT).

Une durée de TP = PT - 2 DT = 109,375 µs est prévue entre les deux trames TCT et TTC. La durée TP permet à la station terminale la plus éloignée de la station centrale de recevoir la trame TCT et, après un faible temps de garde, d'émettre au moins son secteur attribué dans l'intervalle temporel correspondant de la trame TTC.

Pour plus d'informations sur le réglage des synchronisations temporelles d'émission et des puissances d'émission dans les stations terminales à partir de la station centrale, on se référera à la demande de brevet FR-A-2636482 déposée le 13 septembre 1988 et à la demande de brevet français No 90-08211 déposée le 29 juin 1990 (FR-A-2664112) dont les contenus sont inclus dans la présente description.

## Revendications

1. Procédé pour multiplexer une pluralité de canaux numériques parallèles (CEF1-CEF8, CEE1-CEE8) ayant des débits primaires (dF, dE) qui sont différents, en une trame numérique (TCT) ayant des durée et période prédéterminées (DT, PT), caractérisé en ce que la trame (TCT) comporte des secteurs (S1-S8) de durée prédéterminée (DS) auxquels sont assignés des canaux numériques parmi ladite pluralité de canaux et qui ont des débits en ligne (DF, DE) supérieurs auxdits débits primaires (dF, dE) des canaux assignés respectivement, lesdits débits en ligne étant différents et sous-multiples d'un plus grand débit en ligne (DE).

2. Procédé conforme à la revendication 1, caractérisé par une durée de trame (DT) inférieure à la période de trame (PT), de préférence inférieure à une demi-période de trame (PT/2).

3. Procédé conforme à la revendication 1 ou 2, caractérisé par la formation d'une trame donnée (TCT) suivant les étapes suivantes :
- mémorisation de bits des canaux pendant une période de trame (PT) précédant la trame donnée (TCT) respectivement aux débits primaires (dF, dE) pour constituer des groupes mémorisés parallèles de bits sérialisés de canal (80 x 8; 1024 x 8),
- lecture parallèle des groupes de bits de canal à des débits en ligne (DF, DE) correspondants respectivement auxdits débits primaires (dF, dE) des canaux pendant la durée (DS) de chacun des secteurs de la trame donnée respectivement, afin de répéter chacun des groupes de bits autant de fois qu'il y a de secteurs (S1-S8) dans une trame,
- assignation de canaux numériques parmi ladite pluralité de canaux numériques auxdits secteurs (S1-S8) de la trame, respectivement, et
- sélection de l'un des groupes parallèles de bits répétés provenant des canaux assignés pendant la durée (DS) du secteur respectif afin de multiplexer des groupes de bits sélectionnés, à raison d'un groupe par secteur, dans la trame donnée (TCT).

4. Procédé conforme à la revendication 3, caractérisé en ce que le nombre de bits (nbF, nbE) dans un groupe mémorisé est inférieur au nombre de bits (NBF, NBE) contenus dans le secteur respectif (S1-S8), la différence entre lesdits nombres correspondant notamment à des bits de remplissage de secteurs de préférence égaux à des premiers bits du groupe mémorisé.

5. Procédé conforme à la revendication 3 ou 4, caractérisé par l'introduction d'un secteur de bits de gestion (SG) localisé en en-tête de la trame (TCT), succédant au multiplexage des groupes de bits sélectionnés.

6. Procédé conforme à la revendication 5, caractérisé en ce que le débit en ligne dans le secteur de gestion (SG) est égal au plus petit des débits en ligne (DF) des secteurs de canal.

7. Dispositif de multiplexage (DM) pour multiplexer une pluralité de canaux numériques parallèles (CEF1-CEF8, CEE1-CEE8) ayant des débits primaires (dF, dE) qui sont différents, en une trame numérique (TCT) ayant des durée et période prédéterminées (DT, PT), comprenant plusieurs moyens (2FA, 2FB, 2EA, 2EB) pour mémoriser des bits des canaux (CEF1-CEF8, CEE1-CEE8) en parallèle respectivement,
caractérisé en ce que la trame (TCT) comporte des secteurs (S1-S8) de durée prédéterminée (DS) auxquels sont assignés des canaux numériques parmi ladite pluralité de canaux et qui ont des débits en ligne (DF, DE) supérieurs auxdits débits primaires (dF, dE) des canaux assignés respectivement, lesdits débits en ligne étant différents et sous-multiples d'un plus grand débit en ligne (DE), et
en ce que le dispositif de multiplexage comprend :
- plusieurs moyens (3FA, 3FB ; 3EA, 3EB) pour écrire des groupes parallèles de bits de canal respectivement dans les moyens pour mémoriser auxdits débits primaires (dF ; dE) pendant chaque période de trame (PT),
- plusieurs moyens (3FA, 3FB ; 3EA, 3EB) pour lire les groupes de bits dans les moyens pour mémoriser, auxdits débits en ligne (DF, DE) correspondant respectivement aux débits primaires des canaux pendant la durée (DS) de chacun des secteurs (S1-S8) d'une trame,
- des moyens (5,UG) pour mémoriser des adresses de canaux numériques assignés respectivement aux secteurs de trame,
- des moyens (6) pour lire les adresses de canal assigné en correspondance aux secteurs respectifs dans la trame, et
- des moyens (4F, 4E) pour multiplexer des groupes de bits lus respectivement en réponse aux adresses de canal assigné et pendant les durées de secteur de trame.

8. Dispositif de multiplexage conforme à la revendication 7, caractérisé en ce que les moyens pour mémoriser des bits provenant de canaux ayant un même débit primaire (dF ; dE) comprennent des première et seconde mémoires tampons (3FA et 3FB ; 3EA et 3EB) en parallèle,
- les bits desdits canaux étant écrits dans la première mémoire audit débit primaire (dF ; dE) pendant une période de trame donnée (PT), et des groupes de bits desdits canaux étant lus dans la seconde mémoire aux débits en ligne (DF ; DE) des secteurs assignés auxdits canaux pendant tous les secteurs de la trame incluse dans la période de trame donnée,
- et inversement pendant la période de trame succédant à la période de trame donnée.

9. Procédé pour démultiplexer des canaux numériques (CSF1-CSF8, CSE1-CSE8) à partir d'une trame numérique (TTC) ayant des durée et période prédéterminées (DT, PT), la trame (TTC) comportant des secteurs (S1-S8) de durée prédéterminée (DS) auxquels sont assignés les canaux numériques et qui ont des débits en ligne (DF, DE) supérieurs à des débits primaires (dF, dE) des canaux assignés respectivement, lesdits débits primaires (dF, dE) étant différents, et lesdits débits en ligne étant différents et sous-multiples d'un plus grand débit en ligne (DE),
le procédé comprenant les étapes suivantes :
- mémorisation des bits de canaux (bits utiles) respectivement compris dans les secteurs pendant les durées (DS) des secteurs (S1-S8) de la trame donnée (TTC) et au plus grand débit en ligne (DE),
- lecture de groupes de bits en série respectivement associés à des rangs des bits dans tous les secteurs, les rangs étant définis par rapport aux bits dans un secteur ayant le plus grand débit en ligne (DE), chaque groupe (r,1 à r,8) comprenant des bits localisés à un même rang respectivement dans les secteurs (S1-S8), et ladite lecture des groupes s'effectuant au plus grand débit primaire (dE) de manière à produire un signal multiplex (SM) où les secteurs sont multiplexés bit à bit pendant une période de trame (PT) et,
- aiguillage cyclique des bits du signal multiplex (SM) respectivement vers les canaux numériques assignés auxdits secteurs.

10. Procédé conforme à la revendication 9, caractérisé par l'extraction d'un secteur de bits de gestion (SG) localisé en en-tête de la trame (TTC) et ayant le plus petit débit en ligne (DF), ladite extraction précédant la mémorisation des bits de canaux.

11. Dispositif de démultiplexage (DD) pour démultiplexer des canaux numériques (CSF1-CSF8, CSE1-CSE8) à partir d'une trame numérique (TTC) ayant des durée et période prédéterminées (DT, PT), la trame (TTC) comportant des secteurs (S1-S8) de durée prédéterminée (DS) auxquels sont assignés les canaux numériques et qui ont des débits en ligne (DF, DE) supérieurs à des débits primaires (dF, dE) des canaux assignés respectivement, lesdits débits primaires (dF, dE) étant différents, et lesdits débits en ligne étant différents et sous-multiples d'un plus grand débit en ligne (DE),
le dispositif de démultiplexage comprenant :
- des moyens (17) pour convertir les bits de canal en série dans chacun des secteurs (S1-S8) de la trame donnée (TTC) en des groupes successifs à NB bits de canal parallèles ((1,1), (2,1), (3,1), (4,1) à (1021,8), (1022,8), (1023,8), (1024,8)), où le nombre de bits NB est sous-multiple du nombre de secteurs de canal NS dans une trame (TTC),
- des moyens (18A, 18B) pour mémoriser les groupes à NB bits parallèles pendant une période de trame (PT),
- des moyens (19A, 19B) pour écrire les groupes à NB bits parallèles dans les moyens pour mémoriser à un débit (DE/NB) sous-multiple du plus grand débit en ligne (DE) dans les secteurs de trame par rapport au nombre de bits NB,
- des moyens (19A, 19B) pour lire les groupes à NB bits parallèles dans les moyens pour mémoriser à un débit (NS x dE) multiple du plus grand débit primaire de canal (dE) par rapport au nombre de secteurs NS, la lecture des groupes s'effectuant de sorte que NS groupes à NB bits parallèles contenant des bits localisés à NB mêmes rangs respectivement dans les NS secteurs de trame (S1-S8) sont lus successivement audit débit multiple (NS x dE) afin de former un ensemble à NS groupes, et chacun des ensembles à NS groupes est lu successivement NB fois audit plus grand débit primaire (dE),
- des moyens (20,21) pour sélectionner successivement NB séries ayant chacune NS bits consécutifs dans NB ensembles identiques lus successivement, une série comprenant des bits ayant un rang identique dans les secteurs (S1-S8), et les séries étant sélectionnées selon l'ordre croissant des rangs des bits dans les secteurs de manière à obtenir le signal multiplex (SM) où les secteurs sont multiplexés bit à bit durant une période de trame, et
- des moyens (22) pour aiguiller les bits du signal multiplex (SM) vers les canaux numériques (CSF1-CSF8, CSE1-CSE8) en fonction de la correspondance entre des adresses des secteurs de trame et des adresses de canaux.

12. Dispositif de démultiplexage conforme à la revendication 11, caractérisé en ce que les moyens pour mémoriser comprennent des première et seconde mémoires tampons (18A, 18B),
- des groupes à NB bits parallèles étant écrits dans la première mémoire audit débit sous-multiple (DE/NB) pendant les secteurs d'une trame donnée (TTC) et des groupes à NB bits parallèles étant lus dans la seconde mémoire audit débit multiple (NS x dE) pendant la période (PT) de ladite trame donnée,
- et inversement pendant la période de trame succédant à la période de la trame donnée.

13. Dispositif de démultiplexage conforme à la revendication 11 ou 12, caractérisé en ce que les moyens pour lire (19A, 19B) produisent des adresses de lecture des groupes à NB bits parallèles, chacune des adresses de lecture comprenant une première partie et une seconde partie,
- la première partie étant représentative du rang des secteurs dans la trame et étant incrémentée audit débit multiple (NS x dE) et modulo-NS, et
- la seconde partie étant représentative du rang des groupes à NB bits dans un secteur et étant incrémentée à un débit (dE/NS) sous-multiple dudit plus grand débit primaire (dE) par rapport au nombre de secteurs NS.

14. Dispositif de démultiplexage conforme à l'une quelconque des revendications 11 à 13, caractérisé en ce que les moyens pour aiguiller (22) comprennent :
- des moyens (25,26,UG) pour mémoriser des adresses des canaux numériques assignés respectivement aux secteurs de trame,
- des moyens (27) pour lire cycliquement les adresses de canal assigné en correspondance avec des adresses des secteurs de trame audit débit multiple (NS x dE),
- des moyens (23F1-24F1 à 23E8-24E8) pour démultiplexer chacune des séries à NS bits consécutifs en réponse à un cycle d'adresse de secteur de manière à produire des signaux numériques parallèles de canal ayant le plus grand débit primaire (dE), et
- plusieurs mémoires tampons (28) associées aux canaux ayant des débits primaires (dF) inférieurs au plus grand débit primaire (dE) et dans laquelles les signaux de canal sont écrits audit plus grand débit primaire (dE) et sont lus auxdits débits primaires des canaux numériques respectifs.

15. Station centrale reliée à des canaux numériques bidirectionnels (CEF1-CSF1 à CEE8-CSE8) ayant des débits primaires (dF, dE) qui sont différents, pour desservir plusieurs stations terminales qui communiquent avec la station centrale à travers un réseau de communication arborescent multidébit (SUT) et qui sont adaptées à des débits en ligne (DF, DE) respectivement associés et supérieurs aux débits primaires (dF, dE), caractérisée en ce qu'elle comprend un dispositif de multiplexage (DM) conforme à la revendication 7 ou 8 et un dispositif de démultiplexage (DD) conforme à l'une quelconque des revendications 11 à 14.

16. Station centrale conforme à la revendication 15, caractérisée en ce que le nombre de canaux ayant un même débit primaire (dF, dE) est au plus égal au nombre (NS) de secteur, dans une trame.

17. Station centrale conforme à la revendication 15 ou 16, caractérisée en ce qu'elle comprend des moyens (9) pour mémoriser les secteurs d'une trame (TTC) entrante dans le dispositif de démultiplexage (DD) et composée par les stations terminales, des moyens (10) pour lire les secteurs de trame entrante en synchronisme avec une trame (TCT) sortant du dispositif de multiplexage (DM), et des moyens (8) pour crypter les secteurs de la trame sortante (TCT) par les secteurs lus de la trame entrante (TTC).

18. Station terminale communiquant avec la station centrale conforme à l'une quelconque des revendications 15 à 17, propre à recevoir un canal numérique entrant (CEE) par l'intermédiaire d'un secteur prédéterminé dans une trame (TCT) sortant de la station centrale et à transmettre un canal numérique sortant (CSE) dans un secteur prédéterminé d'une trame (TTC) entrant dans la station centrale,
les canaux numériques sortant et entrant ayant un débit primaire (dE) inférieur à un débit en ligne (DE) des secteurs prédéterminés dans les trames entrante et sortante, chacune des trames (TCT, TTC) comportant des secteurs (S1-S8) de durée prédéterminée (DS) auxquels sont assignés des canaux numériques et qui ont des débits en ligne (DF, DE) supérieurs à des débits primaires (dF, dE) des canaux assignés respectivement, lesdits débits en ligne étant différents et sous-multiples d'un plus grand débit en ligne (DE),
la station terminale comprenant des moyens (31-35) pour extraire le secteur prédéterminé de la trame (TCT) sortant de la station centrale et pour convertir le secteur extrait en un groupe de bits au débit primaire du canal numérique (CEF) entrant dans la station terminale, et des moyens (36-42) pour convertir un groupe de bits au débit primaire du canal numérique (CSE) sortant de la station terminale en le secteur prédéterminé introduit dans la trame (TTC) entrant dans la station centrale.

## Claims

1. Method for multiplexing a plurality of parallel digital channels (CEF1-CEF8, CEE1-CEE8) having primary rates (dF, dE) which are different, into a digital frame (TCT) having predetermined duration and period (DT, PT), characterized in that the frame (TCT) comprises sectors (S1-S8) of predetermined duration (DS) to which are allocated digital channels from among said plurality of channels and which have on-line rates (DF, DE) greater than said primary rates (dF, dE) of the allocated channels respectively, said on-line rates being different and sub-multiples of a higher on-line rate (DE).

2. Method according to claim 1, characterized by a frame duration (DT) shorter than the frame period (PT), preferably shorter than a half-period of frame (PT/2).

3. Method according to claim 1 or 2, characterized by the formation of a given frame (TCT) according to the following steps :
- memorizing bits of the channels during a frame period (PT) preceding the given frame (TCT) respectively at the primary rates (dF, dE) in order to constitute parallel memorized groups of serialized channel bits (80 x 8; 1024 x 8),
- parallel reading the groups of channel bits at on-line rates (DF, DE) respectively corresponding to said primary rates (dF, dE) of the channels throughout the duration (DS) of each of the sectors of the given frame respectively, thereby repeating each of the bit groups as many times as there are sectors (S1-S8) in a frame,
- allocating digital channels from among said plurality of digital channels to said sectors (S1-S8) of the frame, respectively, and
- selecting one of the repeated parallel groups of bits coming from the allocated channels throughout the duration (DS) of the respective sector thereby multiplexing the selected groups of bits in the given frame (TCT) including one group per sector.

4. Method according to claim 3, characterized in that the number of bits (nbF, nbE) in a memorized group is lower than the number of bits (NBF, NBE) contained in the respective sector (S1-S8), the difference between said numbers corresponding notably to sector filling bits preferably equal to first bits of the memorized group.

5. Method according to claim 3 or 4, characterized by the introduction of a sector (SG) of management bits located in the heading of the frame (TCT), following the multiplexing of the selected groups of bits.

6. Method according to claim 5, characterized in that the on-line rate in the management sector (SG) is equal to the lowest of the on-line rates (DF) of the channel sectors.

7. Multiplexing device (DM) for multiplexing a plurality of parallel digital channels (CEF1-CEF8, CEE1-CEE8) having primary rates (dF, dE) which are different, into a digital frame (TCT) having predetermined duration and period (DT, PT), comprising plural means (2FA, 2FB, 2EA, 2EB) for memorizing bits of the channels (CEF1-CEF8, CEE1-CEE8) in parallel respectively,
characterized in that the frame (TCT) comprises sectors (S1-S8) having a predetermined duration (DS) to which are allocated digital channels amongst said plurality of channels and which have on-line rates (DF, DE) higher to said primary rates (dF, dE) of the channels respectively allocated, said on-line rates being different and sub-multiples of a highest on-line rate (DE), and
in that the multiplexing device comprises :
- plural means (3FA, 3FB ; 3EA, 3EB) for writing parallel groups of channel bits respectively in the memorizing means at said primary rates (dF ; dE) during each frame period (PT),
- plural means (3FA, 3FB ; 3EA, 3EB) for reading the bit groups in the memorizing means at said on-line rates (DF, DE) respectively corresponding to the primary rates of the channels throughout the durations (DS) of each of the sectors (S1-S8) of a frame,
- means (5, UG) for memorizing addresses of digital channels allocated respectively to the frame sectors,
- means (6) for reading the allocated channel addresses in correspondence with the respective sectors in the frame, and
- means (4F, 4E) for multiplexing groups of bits respectively read in response to the allocated channel addresses and throughout the frame sector durations.

8. Multiplexing device according to claim 7, characterized in that the means for memorizing bits coming from channels having a same primary rate (dF ; dE) comprise first and second buffer memories (3FA and 3FB ; 3EA and 3EB) in parallel,
- the bits of said channels being written in the first memory at said primary rate (dF ; dE) during a given frame period (PT), and groups of bits of said channels being read in the second memory at said on-line rates (DF ; DE) of the sectors assigned to said channels during all the sectors of the frame included in the given frame period,
- and conversely during the frame period following the given frame period.

9. Method for demultiplexing digital channels (CSF1-CSF8, CSE1-CSE8) from a digital frame (TTC) having predetermined duration and period (DT, PT), the frame (TTC) comprising sectors (S1-S8)having a predetermined duration (DS) to which are assigned the digital channels and which have on-line rates (DF, DE) higher to primary rates (dF, dE) of the allocated channels respectively, said primary rates (dF, dE) being different, and said on-line rates being different therebetween and sub-multiples of a highest on-line rate (DE),
the method comprising the following steps :
- memorizing channel bits (useful bits) respectively included in the sectors during the durations (DS) of the sectors (S1-S8) of the given frame (TTC) and at the highest on-line rate (DE),
- reading serialized bit groups respectively associated with ranks of the bits in all the sectors, the ranks being defined with respect to the bits in a sector having the highest on-line rate (DE), each group (r,1 to r,8) comprising bits located at a same rank respectively in the sectors (S1-S8), and said reading of the groups being carried out at the highest primary rate (dE) thereby deriving a multiplex signal (SM) where the sectors are multiplexed bit by bit during a frame period (PT), and
- cyclical switching the bits of the multiplex signal (SM) respectively towards the digital channels allocated to said sectors.

10. Method according to claim 9, characterized by the extraction of a sector (SG) of management bits located in the heading of the frame (TTC) and having the lowest on-line rate (DF), said extraction preceding the memorization of the channel bits.

11. Demultiplexing device (DD) for demultiplexing digital channels (CSF1-CSF8, CSE1-CSE8) from a digital frame (TTC) having predetermined duration and period (DT, PT), the frame (TTC) comprising sectors (S1-S8)having a predetermined duration (DS) to which are assigned the digital channels and which have on-line rates (DF, DE) higher to primary rates (dF, dE) of the allocated channels respectively, said primary rates (dF, dE) being different, and said on-line rates being different therebetween and sub-multiples of a highest on-line rate (DE),
the demultiplexing device comprising :
- means (17) for converting serialized channel bits in each of the sectors (S1-S8) of the given frame (TTC) into successive groups of NB parallel channel bits ((1,1), (2,1), (3,1), (4,1) to (1021,8), (1022,8), (1023,8), (1024,8)), where the number of bits NB is a sub-multiple of the number of channel sectors NS in a frame (TTC),
- means (18A, 18B) for memorizing the NB-parallel-bit groups during a frame period (PT),
- means (19A, 19B) for writing the NB-parallel-bit groups in the memorizing means at a rate (DE/NB) sub-multiple of the highest on-line rate (DE) in the frame sectors with regard to the bit number NB,
- means (19A, 19B) for reading the NB-parallel-bit groups in the memorizing means at a rate (NS x dE) which is a multiple of the highest primary channel rate (dE) with regard to the number of sectors NS, the reading of the groups being carried out in such a way that NS NB-parallel-bit groups containing bits located at NB same ranks respectively in the NS frame sectors (S1-S8) are read successively at said multiple rate (NS x dE) in order to form a set of NS groups, and each of the NS-group sets is successively read NB times at said highest primary rate (dE),
- means (20, 21) for successively selecting NB series each having NS consecutive bits in NB identical sets read successively, a series comprising bits having an identical rank in the sectors (S1-S8), and the series being selected by ascending order of the ranks of the bits in the sectors thereby deriving a multiplex signal (SM) where the sectors are multiplexed bit by bit during a frame period, and
- means (22) for switching the bits of the multiplex signal (SM) towards the digital channels (CSF1-CSF8, CSE1-CSE8) as a function of the correspondence between addresses of the frame sectors and addresses of channels.

12. Demultiplexing device according to claim 11, characterized in that the memorizing means comprise first and second buffer memories (18A, 18B),
- groups of NB parallel bits being written in the first memory at said sub-multiple rate (DE/NB) during the sectors of a given frame (TTC) and groups of NB parallel bits being read in the second memory at said multiple rate (NS x dE) during the period (PT) of said given frame,
- and conversely during the frame period following the given frame period.

13. Demultiplexing device according to claim 11 or 12, characterized in that the reading means (19A, 19B) derive read addresses of the NB-parallel-bit groups, each of the read addresses comprising a first part and a second part,
- the first part being representative of the rank of the sectors in the frame and being incremented at said multiple rate (NS x dE) and modulo-NS, and
- the second part being representative of the rank of the NB-bit groups in a sector and being incremented at a sub-multiple rate (dE/NS) of said highest primary rate (dE) with regard to the number of sectors NS.

14. Demultiplexing device according to any one of claims 11 to 13, characterized in that the switching means (22) comprise:
- means (25,26,UG) for memorizing addresses of the digital channels respectively allocated to the frame sectors,
- means (27) for cyclically reading the allocated channel addresses in correspondence with addresses of the frame sectors at said multiple rate (NS x dE),
- means (23F1-24F1 to 23E8-24E8) for demultiplexing each of the series of NS consecutive bits in response to a cycle of sector addresses thereby deriving parallel digital channel signals having the highest primary rate (dE), and
- several buffer memories (28) associated with the channels having primary rates (dF) lower than the highest primary rate (dE) and in which the channel signals are written at said highest primary rate (dE) and are read at said primary rates of the respective digital channels.

15. Central station connected to bidirectional digital channels (CEF1-CSF1 to CEE8-CSE8) having primary rates (dF, dE) which are different, to serve several terminal stations which communicate with the central station via a multirate tree-structured communication network (SUT) et which are matched to on-line rates (DF, DE) respectively associated with and higher than primary rates (dF, dE), characterized in that it comprises a multiplexing device (DM) according to claim 7 or 8 and a demultiplexing device (DD according to any one of claims 11 to 14.

16. Central station according to claim 15, characterized in that the number of channels having a same primary rate (dF, dE) is at most equal to the number (NS) of sectors in a frame.

17. Central station according to claim 15 or 16, characterized in that it comprises means (9) for memorizing the sectors of a frame (TTC) incoming in the demultiplexing device (DD) and constituted by the terminal stations, means (10) for reading the incoming frame sectors in synchronism with a frame (TCT) leaving the demultiplexing device (DM), and means (8) for encrypting the sectors of the leaving frame (TCT) by the read sectors of the incoming frame (TTC).

18. Terminal station communicating with the central station according to any one of claims 15 to 17, suitable for receiving an incoming digital channel (CEE) via a predetermined sector in a frame (TCT) leaving the central station and for transmitting an outgoing digital channel (CSE) in a predetermined sector of a frame (TTC) entering in the central station,
the outgoing and incoming digital channels having a primary rate (dE) lower than an on-line rate (DE) of the predetermined sectors in the incoming and outgoing frames, each of the frames (TCT, TTC) comprising sectors (S1-S8) of predetermined duration (DS) to which are allocated digital channels and which have on-line rates (DF, DE) higher than primary rates (dF, dE) of the allocated channels respectively, said on-line rates being different and sub-multiples of a higher on-line rate (DE),
the terminal station comprising means (31-35) for extracting the predetermined sector of the frame (TCT) leaving the central station, and for converting the extracted sector into a group of bits at the primary rate of the incoming digital channel (CEF) entering the terminal station, and means (36-42) for converting a group of bits at the primary rate of the digital channel (CSE) leaving the terminal station into the predetermined sector introduced in the frame (TTC) entering the central station.

## Patentansprüche

1. Verfahren zum Multiplexieren einer Mehrzahl von parallelen numerischen Kanälen (CEF1-CEF8, CEE1 - CEE8) mit unterschiedlichen primären Übertragungsraten (dF, dE) zu einem numerischen Rahmen (TCT) mit vorgegebener Dauer und Periode (DT, PT), dadurch gekennzeichnet, daß der Rahmen (TCT) Unterrahmen (S1-S8) von vorgegebener Dauer (DS) aufweist, denen numerische Kanäle unter obiger Mehrzahl von Kanälen zugeteilt sind und die on-line Übertragungsraten (DF, DE) haben, die höher als obige primäre übertragungsraten (dF, dE) der jeweils zugeteilten Kanäle sind, wobei obige on-line Übertragungsraten unterschiedlich sind und in einer größeren on-line übertragungsrate (DE) aufgehen.

2. Verfahren nach Anspruch 1, dadurch gekennzeichnet, daß die Rahmendauer (DT) kleiner als die Rahmenperiode (PT) ist, vorzugsweise kleiner als eine halbe Rahmenperiode (PT/2).

3. Verfahren nach Anspruch 1 oder 2, dadurch gekennzeichnet, daß sich ein vorgegebener Rahmen (TCT) gemäß folgenden Schritten bildet:
- Kanalbitspeicherung während einer Rahmenperiode (PT), die dem vorgegebenen Rahmen (TCT), jeweils bei den primären Übertragungsraten (dF, dE) vorangeht , um parallele gespeicherte Gruppen von seriengewandelten Kanalbits (80 x 8; 1024 x 8) zu bilden,
- paralleles Lesen der Gruppen von Kanalbits bei on-line Übertragungsraten (DF , DE), die jeweils obigen primären Übertragungsraten (dF, dE) der Kanälen während der Dauer (DS) jedes der Unterrahmen des jeweils vorgegebenen Rahmens entsprechen, damit jede der Bitgruppen so oft wiederholt wird wie die Zahl der Unterrahmen (s1-s8) in einem Rahmen,
- Zuteilung der numerischen Kanäle unter obiger Mehrzahl von numerischen Kanälen jeweils zu obigen Unterrahmen (S1-S8) des Rahmens, und
- Auswahl der einen der wiederholten parallelen Bitgruppen aus den während der Dauer (DS) des jeweiligen Unterrahmens zugeteilten Kanälen, damit ausgewählte Bitgruppen im vorgegebenen Rahmen (TCT), in einem Verhältnis von einer Gruppe pro Unterrahmen, multiplexiert werden.

4. Verfahren nach Anspruch 3, dadurch gekennzeichnet, daß die Zahl der Bits (nbF, nbE) in einer gespeicherten Gruppe kleiner als die Zahl der Bits (NBF, NBE) ist, die im jeweiligen Unterrahmen (S1-S8) enthalten ist, wobei der Unterschied zwischen obigen Zahlen nämlich Bits zum Auffüllen von Unterrahmen entspricht, die vorzugsweise ersten Bits der gespeicherten Gruppe gleich sind.

5. Verfahren nach Anspruch 3 oder 4, dadurch gekennzeichnet, daß ein Unterrahmen von Verwaltungsbits (SG), der sich am Rahmenanfang (TCT) befindet, nach dem Multiplexieren der ausgewählten Bitgruppen eingeführt wird.

6. Verfahren nach Anspruch 5, dadurch gekennzeichnet, daß die on-line Übertragungsrate im Verwaltungsunterrahmen (SG) der kleinsten on-line Übertragungsrate (DF) der Kanal-Unterrahmen gleich ist.

7. Vorrichtung zum Multiplexieren (DM), um eine Mehrzahl von parallelen numerischen Kanälen (CEF1-CEF8, CEE1-CEE8) mit unterschiedlichen primären Übertragungsraten (dF, dE) zu einem numerischen Rahmen (TCT) mit vorgegebener Dauer und Periode (DT, PT) zu multiplexieren, welcher Rahmen mehrere Mittel (2FA, 2FB, 2EA, 2EB) enthält, um jeweils die Bits der Parallelkanäle (CEF1-CEF8, CEE1-CEE8) zu speichern,
dadurch gekennzeichnet,
daß der Rahmen (TCT) Unterrahmen (S1-S8) mit vorgegebener Dauer (DS) enthält, denen numerische Kanäle unter obiger Mehrzahl von Kanälen zugeteilt sind, und die on-line Übertragungsraten (DF, DE) haben, die höher als obige primäre Übertragungsraten (dF, dE) der jeweils zugeteilten Kanäle sind, wobei obige Übertragungsraten unterschiedlich sind und in einer größeren on-line Übertragungsrate (DE) aufgehen, und
dadurch, daß die Vorrichtung zum Multiplexieren enthält:
- mehrere Mittel (3FA, 3FB; 3EA, 3EB), um parallele Kanalbitgruppen jeweils in die Mittel zum Speichern, bei obigen primären Übertragungsraten (dF; dE) während jeder Rahmenperiode (PT) zu schreiben,
- mehrere Mittel (3FA, 3FB; 3EA, 3EB), um die Bitgruppen in den Mitteln zum Speichern bei obigen on-line Übertragungsraten (DF, DE) zu lesen, die jeweils den primären Übertragungsraten der Kanäle während der Dauer (DS) jedes Unterrahmens (S1-S8) eines Rahmens entsprechen,
- Mittel (5, UG), um Adressen von numerischen, den jeweiligen Unterrahmen zugeteilten Kanälen zu speichern,
- Mittel (6), um die Adressen von zugeteilten Kanälen zu lesen, entsprechend den jeweiligen Unterrahmen im Rahmen, und
- Mittel (4F, 4E), un Bitgruppen zu multiplexieren, die jeweils als Antwort auf die Adressen von zugeteilten Kanälen, während der Dauer der Unterrahmen, gelesen werden.

8. Vorrichtung zum Multiplexieren nach Anspruch 7, dadurch gekennzeichnet, daß die Mittel zum Speichern von Bits aus Kanälen mit gleicher primärer Übertragungsrate (dF; dE), parallel, einen ersten und einen zweiten Pufferspeicher (3FA und 3FB; 3EA und 3EB) beinhalten,
- wobei die Bits obiger Kanäle im ersten Speicher bei obiger primärer übertragungsrate (dF; dE) während einer gegebenen Rahmenperiode (PT) geschrieben werden, und Bitgruppen obiger Kanäle im zweiten Speicher bei den on-line Übertragungsraten (DF; DE) der den obigen Kanälen zugeteilten Unterrahmen, während aller Unterrahmen des in der gegebenen Rahmenperiode eingeschlossenen Rahmens gelesen werden,
- und umgekehrt während der Rahmenperiode, die nach der gegebenen Rahmenperiode folgt.

9. Verfahren zum Demultiplexieren von numerischen Kanälen (CSF1-CSF8, CSE1-CSE8), ausgehend von einem numerischen Rahmen (TTC) mit vorgegebener Dauer und Periode (DT, PT), wobei der Rahmen (TTC) Unterrahmen (S1-S8) mit vorgegebener Dauer (DS) enthält, denen numerische Kanäle zugeteilt sind, und welche on-line Übertragungsraten (DF, DE) aufweisen, die höher sind als primäre Übertragungsraten (dF, dE) von den jeweils zugeteilten Kanälen, wobei obige primäre Übertragungsraten (dF, dE) unterschiedlich sind und in einer größeren on-line übertragungsrate (DE) aufgehen, und das Verfahren aus folgenden Schritten besteht:
- Speicherung von Kanalbits (nützliche Bits ), die jeweils in den Unterrahmen während der Dauer (DS der Unterrahmen (S1-S8) des gegebenen Rahmens (TTC) und bei höchster on-line Übertragungsrate (DE) mit einbegriffen sind,
- Lesen von Serienbitgruppen, die jeweils Bitreihen in allen Unterrahmen zugewiesen sind, wobei die Reihen im Verhältnis zu den Bits in einem Unterrahmen mit der größten on-line Übertragungsrate (DE) definiert werden, wobei jede Gruppe (r,1 bis r,8) Bits enthält, die sich jeweils in den Unterrahmen (S1-S8) in der gleichen Reihe befinden und wobei obiges Lesen der Gruppen bei der größten primären Übertragungsrate (dE) erfolgt, damit ein Multiplexsignal (SM) erzeugt wird, in welchem die Unterrahmen Bit nach Bit während einer Rahmenperiode (PT) multiplexiert werden und
- zyklisches Leiten der Bits des Multiplexsignals (SM) jeweils in Richtung der den obigen Unterrahmen zugeteilten numerischen Kanäle.

10. Verfahren nach Anspruch 9, durch die Extraktion eines Unterrahmens von Verwaltungsbits (SG) gekennzeichnet, welcher am Anfang des Rahmens (TTC) steht und die kleinste on-line Übertragungsrate (DF) hat, wobei obige Extraktion der Speicherung der Kanalbits vorangeht.

11. Vorrichtung zum Demultiplexieren (DD), um numerische Kanäle (CSF1- CSF8, CSE1-CSE8) ausgehend von einem numerischen Rahmen (TTC) mit vorgegebener Dauer und Periode (DT, PT) zu demultiplexieren, wobei der Rahmen (TTC) Unterrahmen (S1-S8) mit vorgegebener Dauer (DS) enthält, welchen numerische Kanäle zugeteilt werden und welche on-line übertragungsraten (DF, DE) haben, die höher als primäre übertragungsraten (dF, dE) der jeweils zugeteilten Kanäle, wobei obige primäre Übertragungsraten (dF, dE) unterschiedlich sind, und wobei obige on-line Übertragungsraten unterschiedlich sind und in einer größeren on-line Übertragungsrate (DE) aufgehen,
die Vorrichtung zum Demultiplexieren enthält:
- Mittel (17), um Serienkanalbits in jedem der Unterrahmen (S1-S8) des gegebenen Rahmens (TTC) zu aufeinanderfolgenden Gruppen mit NB parallelen Kanalbits ((1,1), (2,1), (3,1), (4,1) bis (1021,8), (1022,8) , (1023,8), (1024,8)) zu konvertieren, wo die Bitzahl NB in der Zahl der Kanal-Unterrahmen NS in einem Rahmen (TTC) aufgeht,
- Mittel (18A, 18B), um die Gruppen mit NB Parallelbits während einer Rahmenperiode (PT) zu speichern,
- Mittel (19A, 19B), um die Gruppen mit NB Parallelbits in die Mittel zum Speichern bei einer übertragungsrate (DE/NB) zu schreiben, die in der größten on-line Übertragungsrate (DE), in den Unterrahmen im Verhältnis zu der Bitzahl NB aufgeht,
- Mittel (19A, 19B), um die Gruppen mit NB Parallelbits in den Mitteln zum Speichern bei einer übertragungsrate (NS x DE) zu lesen, die das Vielfache der größten primären Kanalübertragungsrate (dE) im Verhältnis zu der Unterrahmen-Zahl NS ist, wobei das Lesen der Gruppen derart durchgeführt wird, daß NS Gruppen mit NB Parallelbits, welche Bits enthalten, die sich in NB gleichen Reihen jeweils in den NS Unterrahmen (S1-S8) befinden, bei obiger vielfacher Übertragungsrate (NS x dE) nacheinander gelesen werden, damit eine Menge von NS Gruppen gebildet wird, und jede der Mengen mit NS Gruppen wird NB Male bei der obigen größten primären Übertragungsrate (dE) nacheinander gelesen,
- Mittel (20, 21) um nacheinander NB Serien auszuwählen, die je NS aufeinanderfolgende Bits in NB identischen nacheinander gelesenen Mengen haben, wobei eine Serie Bits enthält, die eine identische Reihe in den Unterrahmen (S1-S8) hat, und wobei die Serien gemäß der zunehmenden Folge der Bitreihen in den Unterrahmen ausgewählt werden, damit das Multiplexsignal (SM) erreicht wird, wo die Unterrahmen Bit nach Bit während einer Rahmenperiode mutliplexiert werden, und
- Mittel (22), um die Bits des Multiplexssignals (SM) in Richtung der numerischen Kanäle (CSF1-CSF8, CSE1-CSE8) im Verhältnis zu der Entsprechung der Unterrahmenadressen zu den Kanaladressen zu leiten.

12. Vorrichtung zum Demultiplexieren nach Anspruch 11, dadurch gekennzeichnet, daß die Mittel zum Speichern einen ersten und einen zweiten Puffer-Speicher (18A, 18B) enthalten,
- Gruppen mit NB Parallelbits, die in dem ersten Speicher bei obiger Teiler-Übertragungsrate (DE/NB) während der Unterrahmen eines gegebenen Rahmens (TTC) geschrieben werden, und Gruppen mit NB Parallelbits, die in dem zweiten Speicher bei obiger Vielfach-Übertragungsrate (NS x dE) während der Periode (PT) des obigen gegebenen Rahmens gelesen werden,
- und umgekehrt während der Rahmenperiode, die nach der Periode des gegebenen Rahmens folgt.

13. Vorrichtung zum Demultiplexieren nach Anspruch 11 oder 12, dadurch gekennzeichnet, daß die Mittel zum Lesen (19A, 19B) Leseadressen für die Gruppen mit NB Parallelbits erzeugen, wobei jede Leseadresse aus einem ersten und einem zweiten Teil besteht,
- wobei der erste Teil typisch für die Reihe der Unterrahmen in dem Rahmen ist und bei obiger Vielfach-Übertragungsrate (NS x dE) und Modulo-NS inkrementiert wird, und
- der zweite Teil typisch für die Reihe der Gruppen mit NB Bits in einem Unterrahmen ist und bei einer übertragungsrate (dE/NS) inkrementiert wird, die in der obigen primären größten Übertragungsrate (dE) im Verhältnis zu der Zahl der Unterrahmen NS aufgeht.

14. Vorrichtung zum Demultiplexieren nach irgendeinem der Ansprüche 11 bis 13, dadurch gekennzeichnet, daß die Mittel zum Leiten (22) enthalten:
- Mittel (25, 26, UG), um Adressen der jeweils den Unterrahmen zugeteilten numerischen Kanälen zu speichern,
- Mittel (27), um die Adressen des entsprechend den Unterrahmenadressen bei obiger Vielfach-Übertragung (NS x dE) zugeteilten Kanals zyklisch zu lesen,
- Mittel (23F1-24F1 bis 23E8-24E8), um jede der Serien mit NS Konsekutivbits als Antwort auf einen Zyklus von Unterrahmenadressen zu demultiplexieren, damit numerische Parallel-Kanalsignale, die die größte primäre übertragungsrate (dE) haben, erzeugt werden, und
- mehrere Puffer-Speicher (28), die mit den Kanälen mit primären Übertragungsraten (dF) in Verbindung stehen, die kleiner als die größte primäre Übertragungsrate (dE) sind, und in welchen die Kanalsignale bei obiger größter primärer Übertragungsrate (dE) geschrieben werden und bei obigen primären Übertragungsraten jeweiliger numerischen Kanälen gelesen werden.

15. Zentralstation verbunden mit numerischen Zweirichtungskanälen (CEF1-CSF1 bis CEE8-CSE8) mit unterschiedlichen primären Übertragungsraten (dF, dE), um mehrere Endstationen zu versorgen, die mit der Zentralstation durch ein verzweigtes Mehrfachübertragungs-Kommunikationsnetz (SUT) verbunden sind und die on-line Übertragungsraten (DF, DE) angepaßt sind, die jeweils höher als obige primäre Übertragungsraten (dF, dE) und mit diesen verbunden sind, dadurch gekennzeichnet, daß sie eine Vorrichtung zum Multiplexieren (DM) nach Anspruch 7 oder 8 und eine Vorrichtung zum Demultiplexieren (DD) nach irgendeinem der Ansprüche 11 bis 14 enthält.

16. Zentralstation nach dem Anspruch 15, dadurch gekennzeichnet, daß die Zahl der Kanäle mit gleicher primärer Übertragungsrate (dF, dE) höchstens der Zahl (NS) der Unterrahmen in einem Rahmen gleicht.

17. Zentralstation nach dem Anspruch 15 oder 16, dadurch gekennzeichnet, daß sie Mittel (9) enthält, um die Unterrahmen eines in eine Vorrichtung zum Demultiplexieren (DD) eintretenden Rahmens (TTC) enthält, und aus Endstationen besteht, sowie Mittel (10), um die Unterrahmen eines eintretenden Rahmens synchron mit einem aus der Vorrichtung zum Demultiplexieren (DM) herauskommenden Rahmen (TCT) zu lesen, und Mittel (8) um die Unterrahmen des herauskommenden Rahmens (TCT) durch die gelesenen Unterrahmen des eintretenden Rahmens (TTC) zu verschlüsseln.

18. Mit der Zentralstation verbundene Endstation nach irgendeinem der Ansprüche 15 bis 17, dazu geeignet, einen eintretenden numerischen Kanal (CEE) mittels eines vorgegebenen Unterrahmens in einem aus der Zentralstation herauskommenden Rahmen (TCT) zu empfangen, und einen herauskommenden numerischen Kanal (CSE) in einem vorgegebenen Unterrahmen eines Rahmens (TTC) zu übertragen, der in die Zentralstation hineintritt,
wobei die herauskommenden und hineintretenden numerischen Kanäle eine primäre Übertragungsrate (dE) aufweisen, die kleiner als eine on-line Übertragungsrate (DE) der vorgegebenen Unterrahmen in dem hineintretenden und herauskommenden Rahmen ist, wobei jeder Rahmen (TCT, TTC) Unterrahmen (S1-S8) mit vorgegebener Dauer (DS) enthält, denen numerische Kanäle zugeteilt sind und die on-line Übertragungsraten (DF, DE) aufweisen, die größer als die primären Übertragungsraten (dF, dE) der jeweils zugeteilten Kanäle sind, wobei obige on-line Übertragungsraten unterschiedlich sind und in einer größeren on-line Übertragungsrate (DE) aufgehen,
wobei die Endstation Mittel (31-35) enthält, um den aus der Zentralstation ausgehenden vorgegebenen Unterrahmen des Rahmens (TCT) zu extrahieren und um den extrahierten Unterrahmen zu einer Bitgruppe bei der primären Übertragungsrate des in die Endstation eintretenden numerischen Kanals (CEF) zu konvertieren, und Mittel (36-42) um eine Bitgruppe mit der primären Übertragungsrate des aus der Endstation ausgehenden numerischen Kanals (CDSE) zu dem vorgegebenen in den Rahmen (TTC) eingeführten Unterrahmen zu konvertieren, welcher Rahmen in die Zentralstation eintritt.
